# EUROPEAN PATENT APPLICATION

(11) **EP 4 734 464 A1**
(43) Date of publication of application: **29.04.2026**
(21) Application number: 24842043.2
(22) Date of filing: 17.05.2024
(51) Int. Cl.: H04L 41/00

(54) **MODEL ACQUISITION METHOD, APPARATUS, AND SYSTEM**

(30) Priority: 20.07.2023 CN 202310902021; 12.01.2024 CN 202410051647
(71) Applicant: Huawei Technologies Co., Ltd., Shenzhen, Guangdong 518129 (CN)
(72) Inventor: FENG, Zhao, Shenzhen, Guangdong 518129 (CN); ZHANG, Zhiqin, Shenzhen, Guangdong 518129 (CN); WANG, Yuan, Shenzhen, Guangdong 518129 (CN); ZHU, Ningbo, Shenzhen, Guangdong 518129 (CN)
(74) Representative: Epping - Hermann - Fischer
(86) International application number: PCT/CN2024/094026
(87) International publication number: WO 2025/016043

(57) **Abstract**

This application provides a model obtaining method, an apparatus, and a system, so that a location management function network element can select a model more suitable for a current environment, to achieve a better positioning effect. The method includes: A location management function network element sends a first message to a network data analytics function network element, where the first message is for requesting a positioning model; and the network data analytics function network element trains a first positioning model based on the first message, and sends the first positioning model to the location management function network element, where the first positioning model is for positioning a terminal device location.

## Description

This application claims priorities to Chinese Patent Application No. 202310902021.1, filed with the China National Intellectual Property Administration on July 20, 2023, and entitled "MODEL OBTAINING METHOD, APPARATUS, AND SYSTEM", and to Chinese Patent Application No. 202410051647.0, filed with the China National Intellectual Property Administration on January 12, 2024, and entitled "MODEL OBTAINING METHOD, APPARATUS, AND SYSTEM", both of which are incorporated herein by reference in their entireties.

### TECHNICAL FIELD

This application relates to the AI positioning field, and in particular, to a model obtaining method, an apparatus, and a system.

### BACKGROUND

A conventional wireless positioning algorithm has poor positioning accuracy in some scenarios and cannot meet a high-accuracy positioning requirement. To improve positioning accuracy, an artificial intelligence (artificial intelligence, AI) positioning solution is provided. In the current AI positioning solution, a location management function (location management function, LMF) obtains training data, and inputs the training data into an AI/machine learning (machine learning, ML) model locally deployed on the LMF. The LMF estimates location information of a terminal device based on an output result of the AI/ML model.

However, obtaining high-accuracy location information of a terminal device in different environments has different requirements for an AI/ML model. In the current AI positioning solution, the local AI/ML model of the LMF is preconfigured in the LMF. As an environment changes, a positioning requirement in a current environment may not be met.

### SUMMARY

Embodiments of this application provide a model obtaining method, an apparatus, and a system, to resolve a problem that a positioning effect may be poor because a location management network element can perform positioning based only on a local preconfigured model.

To achieve the foregoing objective, this application uses the following technical solutions.

According to a first aspect, a model obtaining method is provided. The method may be performed by a location management function network element, may be performed by a component of the location management function network element, for example, a processor, a chip, or a chip system of the location management function network element, or may be implemented by a logical module or software that can implement all or some functions of the location management function network element. The method includes: A location management function network element sends a first message to a network data analytics function network element, where the first message is for requesting a positioning model; and the location management function network element receives a first positioning model from the network data analytics function network element, where the first positioning model is for positioning a terminal device location.

Based on this solution, the location management function network element may obtain a trained positioning model from the network data analytics function network element, and does not need to use only a locally deployed positioning model, so that the location management function network element can select a model more suitable for a current environment, to achieve a better positioning effect.

In a possible design, the first message includes model requirement information, the model requirement information indicates a requirement of the location management function network element for the positioning model, and the model requirement information includes at least one of model structure requirement information and model generalization capability requirement information, where the model structure requirement information indicates a model structure requirement of the location management function network element for the positioning model, and the model generalization capability requirement information indicates a model generalization capability requirement of the location management function network element for the positioning model.

In a possible design, the model structure requirement information is identification information of a model structure type required by the location management function network element.

In a possible design, the model generalization capability requirement information includes information indicating a model performance requirement of the location management function network element for the positioning model in different test data sets.

In a possible design, the different test data sets are test data sets at different terminal device transmit power; the different test data sets are test data sets under different network synchronization errors; or the different test data sets are test data sets under different terminal device timing errors.

In a possible design, the first message includes model type indication information, and the model type indication information indicates that a type of a model requested by the location management function network element is a positioning model.

In a possible design, the method further includes: The location management function network element receives model information from the network data analytics function network element, where the model information includes one or more pieces of model feature information of the first positioning model.

In a possible design, the first message includes second information, and the second information indicates the network data analytics function network element to autonomously determine a positioning model meeting a current environment requirement.

Based on this solution, the network data analytics function network element may autonomously determine a positioning model to be provided for the location management function network element, thereby providing a solution to a problem that some location management function network elements cannot autonomously determine a required model.

In a possible design, the method further includes: The location management function network element receives first environment identification information from the network data analytics function network element, where the first environment identification information corresponds to the first positioning model, and the first environment identification information is for identifying an environment corresponding to the first positioning model.

Based on this solution, the network data analytics function network element may provide, to the location management function network element, the first environment identification information that is for identifying the environment corresponding to the first positioning model, so that the location management function network element can determine an environment to which the first positioning model is applicable.

In a possible design, the method further includes: The location management function network element obtains second environment identification information, where the second environment identification information is for identifying a current environment; and the location management function network element selects a target positioning model from a plurality of positioning models based on environment identification information respectively corresponding to the plurality of positioning models, where the plurality of positioning models include the first positioning model and one or more second positioning models, and environment identification information corresponding to the target positioning model is the same as the second environment identification information.

Based on this solution, if a plurality of positioning models have been deployed on the location management function network element, the location management function network element may obtain, from another network element, the environment identification information that identifies the current environment, and select, based on the environment identification information, a positioning model applicable to the current environment for positioning.

In a possible design, the second positioning model is locally deployed by the location management function network element; or the second positioning model is sent by the network data analytics function network element to the location management function network element.

In a possible design, the method further includes: The location management function network element receives a second message from the network data analytics function network element, where the second message is for requesting training data, the second message includes event identifier information, the event identifier information is for identifying the requested training data, and the training data includes at least one of the following: a channel impulse response, a channel energy response, and a channel power delay profile; the location management function network element obtains the training data based on the event identifier information; and the location management function network element sends the training data to the network data analytics function network element, where the training data is for training the first positioning model. Based on this embodiment of this application, a method for obtaining, by the network data analytics function network element, at least one of the channel impulse response, the channel energy response, and the channel power delay profile as training data of a positioning model is provided. The network data analytics function network element may train the positioning model based on the obtained data, to improve model accuracy of the positioning model.

In a possible design, the method further includes: The location management function network element receives a third message from the network data analytics function network element, where the third message is for requesting location information of a terminal device; and the third message includes first indication information, where the first indication information indicates a first capability of the terminal device, and the first capability is a capability of the terminal device to provide first location information of the terminal device; the location management function network element obtains the first location information of the terminal device based on a preconfigured correspondence between a terminal device and a first capability; and the location management function network element sends the first location information of the terminal device to the network data analytics function network element, where the first location information of the terminal device is for training the first positioning model.

Based on this embodiment of this application, a method for obtaining, by the network data analytics function network element, terminal location information that has a smaller error from a real terminal device location is provided, so that accuracy of a label of training data of a positioning model can be improved, thereby improving model accuracy of the positioning model.

In a possible design, that the location management function network element obtains the first location information of the terminal device includes: The location management function network element obtains preconfigured first location information of the terminal device; or the location management function network element receives the first location information from the terminal device.

According to a second aspect, a data obtaining method is provided. The method may be performed by a location management function network element, may be performed by a component of the location management function network element, for example, a processor, a chip, or a chip system of the location management function network element, or may be implemented by a logical module or software that can implement all or some functions of the location management function network element. The method includes: A location management function network element receives a second request message from a network data analytics function network element; and the location management function network element sends a second response message to the network data analytics function network element, where the second request message is for requesting location information of a terminal device; and the second response message includes location information of M terminal devices, and M is a positive integer.

Based on this solution, a method for requesting, by the network data analytics function network element, the location information of the terminal device is provided. A first network element may send location information of a large quantity of terminal devices, so that a data training set can be extended, thereby improving model accuracy of a positioning model.

In a possible design, the location management function network element receives identification information of a positioning reference unit (positioning reference unit, PRU) PRU of the terminal device from the network data analytics function network element; or the second request message includes identification information of a PRU of the terminal device, where the location information of the M terminal devices is location information corresponding to identification information of the PRUs of the M terminal devices.

Based on this embodiment of this application, the network data analytics function network element can request the location information corresponding to the identification information of the terminal device or of the PRU of the terminal device, so that a label of training data better meets a positioning model training requirement, to provide a feasible solution for the network data analytics function network element to request the location information of the PRU of the terminal device.

In a possible design, the location management function network element receives second indication information from the network data analytics function network element; or the second request message further includes second indication information, where the second indication information indicates to obtain location information of a terminal device that is for model training, and the location information of the M terminal devices is location information of one or more terminal devices in which a PRU exists and/or location information of one or more terminal devices in which no PRU exists.

Based on this embodiment of this application, the first network element may send location information of a large quantity of terminal devices, so that a data training set can be extended, thereby improving model accuracy of a positioning model.

In a possible design, the location management function network element receives third indication information from the network data analytics function network element; or the second request message further includes third indication information, where the third indication information indicates to obtain location information of a PRU of the terminal device, and the location information of the M terminal devices is location information of M terminal devices in which a PRU exists.

Based on this embodiment of this application, the network data analytics function network element can request the location information of the PRU of the terminal device. Because positioning accuracy of the location information of the PRU of the terminal device is high, accuracy of a label of training data (the label of the training data is the location information of the terminal device) of a positioning model can be improved, thereby improving model accuracy of the positioning model. In a possible design, the location management function network element receives quantity threshold information from the network data analytics function network element; or the second request message further includes quantity threshold information, where the quantity threshold information indicates a quantity threshold of location information of the terminal device that is expected to be obtained.

Based on this embodiment of this application, a quantity of pieces of location information of the terminal device sent by the first network element may be limited. On one hand, it can be ensured as much as possible that a quantity of pieces of location information of the terminal device obtained by the network data analytics function network element meets a positioning model training requirement, thereby improving model accuracy of a positioning model. On the other hand, it can be ensured as much as possible that a quantity of pieces of location information of the terminal device obtained by the network data analytics function network element is limited within a specific range, thereby reducing transmission overheads and improving training efficiency of a positioning model.

In a possible design, the location management function network element receives fourth indication information from the network data analytics function network element; or the second request message further includes fourth indication information; and the location management function network element determines the location information of the M terminal devices based on the fourth indication information, where the fourth indication information indicates information about a quality requirement, and quality of the location information of the M terminal devices meets the quality requirement.

Based on this embodiment of this application, the location management function network element determines the location information of the M terminal devices based on the fourth indication information, to ensure high positioning accuracy of the location information of each of the M terminal devices as much as possible, and further ensure high accuracy of a label of training data of a positioning model as much as possible, thereby improving model accuracy of the positioning model.

In a possible design, the location management function network element receives fifth indication information from the network data analytics function network element; or the second request message further includes fifth indication information; and the location management function network element determines the location information of the M terminal devices based on the fifth indication information, where the fifth indication information indicates a threshold of a ratio of a quantity of terminal devices in which a PRU exists in the location information of the terminal device that is expected to be obtained to a quantity of all terminal devices, and a ratio of a quantity of terminal devices in which a PRU exists in the M terminal devices to M meets the ratio threshold. Based on this embodiment of this application, the first network element determines the location information of the M terminal devices based on the fifth indication information, so that there are a large quantity of terminal devices in which a PRU exists (that is, positioning accuracy of location information of a PRU of a terminal device is high), thereby ensuring high accuracy of a label of training data of a positioning model as much as possible, and improving model accuracy of the positioning model.

In a possible design, the location management function network element sends, to the network data analytics function network element, quality information corresponding to the location information of the M terminal devices; or the second response message further includes quality information corresponding to the location information of the M terminal devices.

In a possible design, the location management function network element receives third request information from the network data analytics function network element; or the second request message further includes third request information, where the third request information is for requesting quality information corresponding to the location information of the terminal device. Based on the foregoing two possible designs, the location management function network element may actively send the quality information to the network data analytics function network element, or may send the quality information to the network data analytics function network element based on the third request information. In addition, the network data analytics function network element may determine the quality corresponding to the location information of the M terminal devices, to determine the location information of the N terminal devices based on the quality. This can ensure, as far as possible, that positioning accuracy of the location information of each of the N terminal devices is high, and can improve accuracy of a label of training data of a positioning model, thereby improving model accuracy of the positioning model.

In a possible design, the location management function network element sends sixth indication information to the network data analytics function network element; or the second response message further includes sixth indication information, where the sixth indication information indicates whether a PRU exists in each of the M terminal devices.

Based on this embodiment of this application, the network data analytics function network element can determine as much location information of PRUs of terminal devices as possible (that is, positioning accuracy of location information of a PRU of a terminal device is high), so that accuracy of a label of training data of a positioning model can be improved, thereby improving model accuracy of the positioning model.

In a possible design, the location management function network element sends seventh indication information to the network data analytics function network element; or the second response message further includes seventh indication information, where the seventh indication information indicates a location generation method corresponding to location information of each of the M terminal devices.

Based on this embodiment of this application, positioning accuracy of location information of terminal devices corresponding to different generation methods is different, so that the network data analytics function network element can determine location information of a terminal device with high positioning accuracy based on a generation method corresponding to location information of a terminal device; or the network data analytics function network element can determine location information of a terminal device with high positioning accuracy based on quality information, so that accuracy of a label of training data of a positioning model can be improved, thereby improving model accuracy of the positioning model.

In a possible design, the location management function network element receives fourth request information from the network data analytics function network element; or the second request message further includes fourth request information; and the location management function network element sends, to the network data analytics function network element, the first data corresponding to the location information of the M terminal devices, where the fourth request information is for requesting first data corresponding to the location information of the M terminal devices; and the first data is for training the first positioning model.

Based on this embodiment of this application, the network data analytics function network element can receive, when receiving the location information of the terminal device, the first data corresponding to the location information of the terminal device, so that it can be ensured as much as possible that the first data and the label of the first data are consistent in terms of time. A feasible solution of associating the first data with the label of the first data is provided.

In a possible design, the location information of each terminal device further includes time information; or the second response message further includes time information corresponding to the location information of each terminal device, where the time information indicates time for obtaining the location information.

Based on this embodiment of this application, a feasible solution for determining the time corresponding to the location information is provided.

According to a third aspect, a model obtaining method is provided. The method may be performed by a network data analytics function network element, may be performed by a component of the network data analytics function network element, for example, a processor, a chip, or a chip system of the network data analytics function network element, or may be implemented by a logical module or software that can implement all or some functions of the network data analytics function network element. The method includes: A network data analytics function network element receives a first message from a location management function network element, where the first message is for requesting a positioning model; the network data analytics function network element trains a first positioning model based on the first message; and the network data analytics function network element sends the first positioning model to the location management function network element.

Based on this solution, the location management function network element may obtain a trained positioning model from the network data analytics function network element, and does not need to use only a locally deployed positioning model, so that the location management function network element can select a model more suitable for a current environment, to achieve a better positioning effect.

In a possible design, the first message includes model requirement information, the model requirement information indicates a requirement of the location management function network element for the positioning model, and the model requirement information includes at least one of model structure requirement information and model generalization capability requirement information, where the model structure requirement information indicates a model structure requirement of the location management function network element for the positioning model, and the model generalization capability requirement information indicates a model generalization capability requirement of the location management function network element for the positioning model.

In a possible design, the model structure requirement information is identification information of a structure type required by the location management function network element.

In a possible design, the model generalization capability requirement information indicates a model performance requirement of the location management function network element for the positioning model in different test data sets.

In a possible design, the different test data sets are test data sets at different terminal device transmit power; the different test data sets are test data sets under different network synchronization errors; or the different test data sets are test data sets under different terminal device timing errors.

In a possible design, the first message includes model type indication information, and the model type indication information indicates that a type of a model requested by the location management function network element is a positioning model.

In a possible design, the method further includes: The network data analytics function network element sends model information to the location management function network element, where the model information includes one or more pieces of model feature information of the first positioning model.

In a possible design, the first message includes second information, and the second information indicates the network data analytics function network element to autonomously determine a positioning model meeting a current environment requirement.

Based on this solution, the network data analytics function network element may autonomously determine a positioning model to be provided for the location management function network element, thereby providing a solution to a problem that some location management function network elements cannot autonomously determine a required model.

In a possible design, that the network data analytics function network element trains the first positioning model based on the first message includes: The network data analytics function network element determines, based on the first message, first environment identification information corresponding to a current environment; and the network data analytics function network element trains, based on the first environment identification information, the first positioning model corresponding to the first environment identification information.

Based on this solution, the network data analytics function network element may determine an environment identifier of the current environment, and determine, based on the environment identifier, a model that needs to be trained, to obtain, through training, a positioning model applicable to the current environment.

In a possible design, the method further includes: The network data analytics function network element sends the first environment identification information to the location management function network element.

Based on this solution, the network data analytics function network element may provide, to the location management function network element, the first environment identification information that is for identifying the environment corresponding to the first positioning model, so that the location management function network element can determine an environment to which the first positioning model is applicable.

In a possible design, the method further includes: The network data analytics function network element receives first request information from the location management function network element, where the first request information is for requesting the network data analytics function network element to provide environment identification information; the network data analytics function network element determines second environment identification information based on the first request information; and the network data analytics function network element sends the second environment identification information to the location management function network element.

Based on this solution, the network data analytics function network element may provide, for the location management function network element, environment identification information that identifies the current environment, to assist the location management function network element in selecting a positioning model applicable to the current environment.

In a possible design, the method further includes: The network data analytics function network element sends a second message to a first network element, where the second message is for requesting training data, the second message includes event identifier information, the event identifier information is for identifying the requested training data, and the training data includes at least one of the following: a channel impulse response, a channel energy response, and a channel power delay profile; and receiving, by the network data analytics function network element, training data from the first network element. That the network data analytics function network element trains the first positioning model includes: The network data analytics function network element trains the first positioning model based on the training data.

Based on this embodiment of this application, a method for obtaining, by the network data analytics function network element, at least one of the channel impulse response, the channel energy response, and the channel power delay profile as training data of a positioning model is provided. The network data analytics function network element may train the positioning model based on the obtained data, to improve model accuracy of the positioning model.

In a possible design, the first network element is the location management function network element, an operations, administration and management function network element, a session management function network element, an access and mobility management function network element, or an application function network element.

In a possible design, the method further includes: The network data analytics function network element sends a third message to the location management function network element, where the third message is for requesting location information of a terminal device; and the network data analytics function network element receives first location information of the terminal device from the location management function network element. That the network data analytics function network element trains the first positioning model includes: The network data analytics function network element trains the first positioning model based on the first location information of the terminal device.

Based on this embodiment of this application, a method for obtaining, by the network data analytics function network element, terminal location information that has a smaller error from a real terminal device location is provided, so that accuracy of a label of training data of a positioning model can be improved, thereby improving model accuracy of the positioning model.

In a possible design, before the network data analytics function network element sends the third message to the location management function network element, the method further includes: The network data analytics function network element sends a fourth message to a data management network element, where the fourth message includes first indication information, the first indication information indicates a first capability of the terminal device, the first capability is a capability of the terminal device to provide the first location information of the terminal device, and the fourth message is for requesting an identifier of the terminal device that has the first capability; and the network data analytics function network element receives, from the data management network element, identification information of the terminal device corresponding to the first indication information, where the identification information of the terminal device is carried in the third message, and the identification information of the terminal device is used by the location management function network element to determine the first location information of the terminal device.

In a possible design, the method further includes: The network data analytics function network element sends a third message to a data management network element, where the third message includes first indication information, the first indication information indicates a first capability of a terminal device, the first capability is a capability of the terminal device to provide first location information of the terminal device, and the third message is for requesting the first location information of the terminal device that has the first capability; and the network data analytics function network element receives first location information of the terminal device from the data management network element. That the network data analytics function network element trains the first positioning model includes: The network data analytics function network element trains the first positioning model based on the first location information of the terminal device.

In a possible design, the method further includes: The network data analytics function network element receives, from the data management network element, information about a validity time period corresponding to the first location information of the terminal device.

According to a fourth aspect, a data obtaining method is provided. The method may be performed by a network data analytics function network element, may be performed by a component of the network data analytics function network element, for example, a processor, a chip, or a chip system of the network data analytics function network element, or may be implemented by a logical module or software that can implement all or some functions of the network data analytics function network element. The method includes: A network data analytics function network element sends a second request message to a first network element; the network data analytics function network element receives a second response message from the first network element; the network data analytics function network element determines location information of N terminal devices based on the second response message; and the network data analytics function network element trains a first positioning model based on the location information of the N terminal devices, where the second request message is for requesting location information of a terminal device, the second response message indicates location information of M terminal devices, M is a positive integer, and N is a positive integer less than or equal to M.

Based on this embodiment of this application, a method for requesting the location information of the terminal device by the network data analytics function network element is provided. The network data analytics function network element may obtain location information of a large quantity of terminal devices, so that a data training set can be extended, thereby improving model accuracy of a positioning model.

In a possible design, the network data analytics function network element sends the identification information of the PRU of the terminal device to the first network element; or the second request message includes identification information of a PRU of the terminal device, where the location information of the M terminal devices is location information corresponding to identification information of PRUs of the M terminal devices.

Based on this embodiment of this application, the network data analytics function network element can request the location information corresponding to the identification information of the terminal device or of the PRU of the terminal device, so that a label of training data better meets a positioning model training requirement, to provide a feasible solution for the network data analytics function network element to request the location information of the PRU of the terminal device.

In a possible design, the network data analytics function network element sends second indication information to the first network element; or the second request message further includes second indication information, where the second indication information indicates to obtain location information of a terminal device that is for model training, and the location information of the M terminal devices is location information of one or more terminal devices in which a PRU exists and/or location information of one or more terminal devices in which no PRU exists.

Based on this embodiment of this application, the network data analytics function network element receives location information of a large quantity of terminal devices, so that a data training set can be extended, thereby improving model accuracy of a positioning model.

In a possible design, the network data analytics function network element sends third indication information to the first network element; or the second request message further includes third indication information, where the third indication information indicates to obtain location information of a PRU of the terminal device, and the location information of the M terminal devices is location information of M terminal devices in which a PRU exists.

Based on this embodiment of this application, the network data analytics function network element can request the location information of the PRU of the terminal device. Because positioning accuracy of the location information of the PRU of the terminal device is high, accuracy of a label of training data (the label of the training data is the location information of the terminal device) of a positioning model can be improved, thereby improving model accuracy of the positioning model. In a possible design, the network data analytics function network element sends quantity threshold information to the first network element; or the second request message further includes quantity threshold information, where the quantity threshold information indicates a quantity threshold of location information of the terminal device that is expected to be obtained.

Based on this embodiment of this application, the network data analytics function network element may limit a quantity of pieces of location information of the terminal device that are expected to be obtained. On one hand, it can be ensured as much as possible that a quantity of pieces of obtained location information of the terminal device meets a positioning model training requirement, thereby improving model accuracy of a positioning model. On the other hand, it can be ensured as much as possible that a quantity of pieces of obtained location information of the terminal device is limited within a specific range, thereby reducing transmission overheads and improving training efficiency of a positioning model.

In a possible design, the network data analytics function network element sends fourth indication information to the first network element; or the second request message further includes fourth indication information, where the fourth indication information indicates information about a quality requirement, and quality of the location information of the M terminal devices meets the quality requirement.

Based on this embodiment of this application, the first network element can determine the location information of the M terminal devices based on the fourth indication information, to ensure high positioning accuracy of the location information of each of the M terminal devices as much as possible, and further ensure high accuracy of a label of training data of a positioning model as much as possible, thereby improving model accuracy of the positioning model.

In a possible design, the network data analytics function network element sends fifth indication information to the first network element; or the second request message further includes fifth indication information, where the fifth indication information indicates a threshold of a ratio of a quantity of terminal devices in which a PRU exists in the location information of the terminal device that is expected to be obtained to a quantity of all obtained terminal devices, and a ratio of a quantity of terminal devices in which a PRU exists in the M terminal devices to M meets the ratio threshold.

Based on this embodiment of this application, the first network element can determine the location information of the M terminal devices based on the fifth indication information, so that there are a large quantity of terminal devices in which a PRU exists (that is, positioning accuracy of location information of a PRU of a terminal device is high), thereby ensuring high accuracy of a label of training data of a positioning model as much as possible, and improving model accuracy of the positioning model.

In a possible design, the network data analytics function network element receives quality information corresponding to the location information of the M terminal devices from the first network element; or the second response message further including quality information corresponding to the location information of the M terminal devices; or the network data analytics function network element determines, based on positioning accuracy of the location information of the terminal device, quality corresponding to the location information of the M terminal devices; and the network data analytics function network element determines the location information of the N terminal devices based on the quality information corresponding to the location information of the M terminal devices.

In a possible design, the network data analytics function network element sends third request information to the first network element; or the second request message further includes third request information, where the third request information is for requesting quality information corresponding to the location information of the terminal device.

Based on the foregoing two possible designs, the network data analytics function network element may directly receive the quality information, or may request, by using the third request information, the first network element to send the third request information, to receive the quality information. In addition, the network data analytics function network element may determine, based on the quality information or the positioning accuracy, the quality corresponding to the location information of the terminal device, and may determine the location information of the N terminal devices based on the quality corresponding to the location information of the terminal device. This can ensure, as far as possible, that positioning accuracy of the location information of each of the N terminal devices is high, and can improve accuracy of a label of training data of a positioning model, thereby improving model accuracy of the positioning model.

In a possible design, the network data analytics function network element receives sixth indication information from the first network element; or the second response message further includes sixth indication information; and the network data analytics function network element determines the location information of the N terminal devices from the location information of the M terminal devices based on the sixth indication information, where the sixth indication information indicates whether a PRU exists in each of the M terminal devices, and the location information of the N terminal devices includes location information of a terminal device in which a PRU exists.

Based on this embodiment of this application, the network data analytics function network element can determine as much location information of PRUs of terminal devices as possible (that is, positioning accuracy of location information of a PRU of a terminal device is high), so that accuracy of a label of training data of a positioning model can be improved, thereby improving model accuracy of the positioning model.

In a possible design, the network data analytics function network element receives seventh indication information from the first network element; or the second response message further includes seventh indication information; and the network data analytics function network element determines the location information of the N terminal devices from the location information of the M terminal devices based on the seventh indication information, where the seventh indication information indicates a location generation method corresponding to location information of each of the M terminal devices.

Based on this embodiment of this application, positioning accuracy of location information of terminal devices corresponding to different generation methods is different, so that the network data analytics function network element can determine location information of a terminal device with high positioning accuracy based on a generation method corresponding to location information of a terminal device; or the network data analytics function network element can determine location information of a terminal device with high positioning accuracy based on quality information, so that accuracy of a label of training data of a positioning model can be improved, thereby improving model accuracy of the positioning model.

In a possible design, the network data analytics function network element sends fourth request information to a second network element; the network data analytics function network element receives first data corresponding to the location information of the M terminal devices from the second network element; and the network data analytics function network element trains the first positioning model based on the location information of the M terminal devices and the first data corresponding to the location information of the M terminal devices, where the fourth request information is for requesting first data corresponding to the location information of the M terminal devices; and the first data is for training the first positioning model.

Based on this embodiment of this application, the network data analytics function network element can receive, when receiving the location information of the terminal device, the first data corresponding to the location information of the terminal device, so that it can be ensured as much as possible that the first data and the label of the first data are consistent in terms of time. A feasible solution of associating the first data with the label of the first data is provided.

In a possible design, the location information of each terminal device further includes time information; or the second response message further includes time information corresponding to the location information of each terminal device, where the time information indicates time for obtaining the location information.

In a possible design, the network data analytics function network element receives the first data corresponding to the M terminal devices from a third network element; and the network data analytics function network element trains the first positioning model based on the location information corresponding to the time information and the first data.

Based on the foregoing two possible designs, the network data analytics function network element may determine first data of same time based on the time information in the location information of the terminal device, so that it can be ensured that the first data and the label of the first data are consistent in terms of time. A feasible solution of associating the first data with the label of the first data is provided.

In a possible design, the third network element is a location management function network element, an operations, administration and management function network element, a gateway mobile positioning center network element, a session management function network element, an access and mobility management function network element, or an application function network element. In a possible design, the second network element is a location management function network element, an operations, administration and management function network element, a gateway mobile positioning center network element, a session management function network element, an access and mobility management function network element, or an application function network element.

In a possible design, the first network element is a location management function network element, an operations, administration and management function network element, a gateway mobile positioning center network element, a session management function network element, an access and mobility management function network element, or an application function network element. Based on the foregoing three possible designs, several possible designs are provided for the first network element, the second network element, and the third network element.

According to a fifth aspect, a model obtaining method is provided. The method includes: A location management function network element sends a first message to a network data analytics function network element, where the first message is for requesting a positioning model; the network data analytics function network element receives the first message; the network data analytics function network element trains a first positioning model based on the first message, where the first positioning model is for positioning a terminal device location; the network data analytics function network element sends the first positioning model to the location management function network element, and the location management function network element receives the first positioning model.

According to a sixth aspect, a communication apparatus configured to implement the methods is provided. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver, a transceiver machine, or a communication interface.

According to a seventh aspect, a communication apparatus is provided. The apparatus includes a processor and a memory. The memory is configured to store computer instructions. When the processor executes the instructions, the communication apparatus is enabled to perform the method according to any one of the foregoing aspects.

According to an eighth aspect, a communication apparatus is provided. The apparatus includes a processor and a communication interface. The communication interface is configured to communicate with a module outside the communication apparatus. The processor is configured to execute a computer program or instructions, to enable the communication apparatus to perform the method according to any one of the foregoing aspects.

According to a ninth aspect, a communication apparatus is provided. The apparatus includes at least one processor. The processor is configured to execute a computer program or instructions stored in a memory, to enable the communication apparatus to perform the method according to any one of the foregoing aspects. The memory may be coupled to the processor, or may be independent of the processor.

According to a tenth aspect, a computer-readable storage medium is provided. The computer-readable storage medium stores a computer program or instructions. When the computer program or instructions are run on a communication apparatus, the communication apparatus is enabled to perform the method according to any one of the foregoing aspects.

According to an eleventh aspect, a computer program product including instructions is provided. When the computer program product runs on a communication apparatus, the communication apparatus is enabled to perform the method according to any one of the foregoing aspects. According to a twelfth aspect, a communication apparatus (where for example, the communication apparatus may be a chip or a chip system) is provided. The communication apparatus includes a processor, configured to implement the function according to any one of the foregoing aspects. In some possible designs, the communication apparatus includes a memory, and the memory is configured to store necessary program instructions and data.

In some possible designs, when the apparatus is a chip system, the apparatus may include a chip, or may include a chip and another discrete component.

The communication apparatus provided in any one of the sixth aspect to the twelfth aspect may be the location management function network element in the first aspect, or an apparatus included in the location management function network element, for example, a chip or a chip system; or the communication apparatus may be the network data analytics function network element in the second aspect, or an apparatus included in the network data analytics function network element, for example, a chip or a chip system.

It may be understood that, when the communication apparatus provided in any one of the sixth aspect to the twelfth aspect is a chip, a sending action/function of the communication apparatus may be understood as outputting information, and a receiving action/function of the communication apparatus may be understood as inputting information.

For technical effects brought by any one of the designs of the sixth aspect to the twelfth aspect, refer to the technical effects brought by different designs of the first aspect to the fifth aspect. Details are not described herein again.

### BRIEF DESCRIPTION OF DRAWINGS

FIG. 1 is a diagram of three model structures;
FIG. 2 is a diagram of a 5G network architecture based on a service-oriented interface;
FIG. 3 is a diagram of a structure of a communication system according to an embodiment of this application;
FIG. 4 is an interaction diagram of a model obtaining method according to an embodiment of this application;
FIG. 5 is a schematic flowchart 1 of a model obtaining method according to an embodiment of this application;
FIG. 6 is a schematic flowchart 2 of a model obtaining method according to an embodiment of this application;
FIG. 7 is an interaction diagram of a training data obtaining method according to an embodiment of this application;
FIG. 8 is a schematic flowchart of a training data obtaining method according to an embodiment of this application;
FIG. 9 is an interaction diagram of another training data obtaining method according to an embodiment of this application;
FIG. 10 is a schematic flowchart of another training data obtaining method according to an embodiment of this application;
FIG. 11 is a diagram of a structure of a communication apparatus according to an embodiment of this application;
FIG. 12 is a diagram of a structure of another communication apparatus according to an embodiment of this application;
FIG. 13 is an interaction diagram of another training data obtaining method according to an embodiment of this application;
FIG. 14 is an interaction diagram of a positioning model training method according to an embodiment of this application; and
FIG. 15 is an interaction diagram of a positioning model training method according to an embodiment of this application.

### DESCRIPTION OF EMBODIMENTS

For ease of understanding of the technical solutions in embodiments of this application, the following first briefly describes technologies related to this application.
1. AI positioning method:
   In a conventional wireless positioning algorithm, positioning is performed based on a reference signal measurement result between a terminal device and an access network device and a positioning algorithm. The conventional wireless positioning algorithm has poor positioning accuracy in some scenarios, and cannot meet a high-accuracy positioning requirement. To improve positioning accuracy, researchers provide to use an AI/ML model for positioning. In a 5th generation (5th generation, 5G) communication system, an LMF network element may locate a terminal device based on a locally deployed AI/ML model. The following provides descriptions for different scenarios.

In a downlink positioning scenario, an access network device sends a downlink positioning reference signal (positioning reference signal, PRS) to a terminal device. The terminal device measures the PRS to obtain measurement data, and sends the measurement data to an LMF network element. The LMF network element positions the terminal device based on a local AI/ML model and the measurement data of the terminal device, to obtain a location estimation result of the terminal device.

In an uplink positioning scenario, a terminal device sends an uplink channel sounding reference signal (sounding reference signal, SRS) to an access network device. The access network device measures the SRS to obtain measurement data, and sends the measurement data to an LMF network element. The LMF network element positions the terminal device based on a local AI/ML model and the measurement data of the access network device, to obtain a location estimation result of the terminal device.

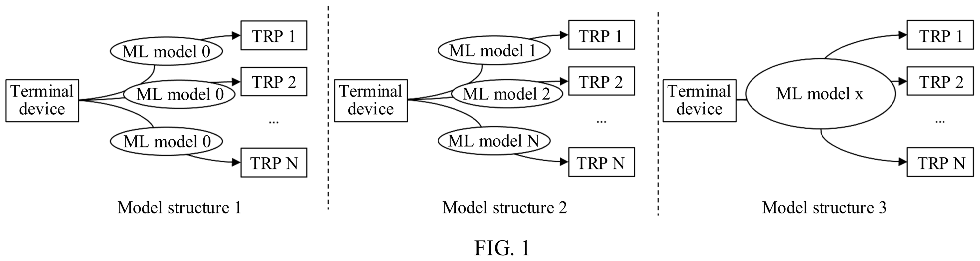

The AI/ML model deployed on the LMF network element may be mainly classified into three types based on a model structure. The following provides descriptions with reference to FIG. 1.

As shown in FIG. 1, it is assumed that measurement data between a terminal device and N transmission reception points (transmission reception point, TRP) needs to be obtained to complete positioning, where N is a positive integer greater than 1. The N TRPs may belong to a same access network device, or may belong to M different access network devices, where M≤N. The N TRPs may be any N TRPs, not fixed N TRPs.

Model structure 1 (same model for N TRPs): N models are used. The N models are the same, for example, an ML model 0 (ML model 0) in the model structure 1 in FIG. 1, and input data of the N models is measurement data between the terminal device and the N TRPs respectively, to be specific, input data of a 1^{st} model is measurement data between the terminal device and a TRP 1, input data of a 2^{nd} model is measurement data between the terminal device and a TRP 2, ..., and input data of an N^{th} model is measurement data between the terminal device and a TRP N. The N models are assisted-AI positioning (assisted-AIML, A-AIML) models, and the LMF calculates an estimated terminal device location by using output results of the N models.

Model structure 2 (N models for N TRPs): N models are used. The N models are different (for example, an ML model 1, an ML model 2, and an ML model N in the model structure 2 in FIG. 1), and input data of the N models is measurement data between the terminal device and the N TRPs respectively, to be specific, input data of a 1^{st} model is measurement data between the terminal device and a TRP 1, input data of a 2^{nd} model is measurement data between the terminal device and a TRP 2, ..., and input data of an N^{th} model is measurement data between the terminal device and a TRP N. The N models are A-AIML models, and the LMF calculates an estimated terminal device location by using output results of the N models.

Model structure 3 (one model for N TRPs): One model (for example, an ML model x in the model structure 3 in FIG. 1) is used for N TRPs, and input data of the model is measurement data between the terminal device and the N TRPs. This model is a direct-AIML positioning (direct-AIML, D-AIML) model. An output of this model is an estimated terminal device location.

### 2. Model distribution procedure:

A 5G system introduces a network data analytics function (network data analytics function, NWDAF) network element, which is classified into two types: a model training logical function (model training logical function, MTLF) and an analytics logical function (analytics logical function, AnLF). The MTLF may collect data in a network, train an AI/ML model based on the data, and may provide a trained model for the AnLF at a request of the AnLF. The AnLF may perform data statistics collection and inference, or perform model inference based on the AI/ML model, export a corresponding analysis result based on a user request, and expose the analysis result to a user.

Currently, a requester (NWDAF service consumer) that subscribes to the model from the MTLF may be an AnLF or another MTLF. The NWDAF service consumer may subscribe to a model from the MTLF based on the following model distribution procedure. The following procedure applies to AI/ML model subscription. The following uses ML model subscription as an example.

Step 1: The NWDAF service consumer sends a model subscription request message to an NWDAF network element (NWDAF containing MTLF) that includes the MTLF. The model subscription request message includes the following parameters:
1. Analytics type identifier list (a list of Analytics ID(s)): identifies an analytics type of a model.
   The MTLF determines, based on the parameter, a model to be trained (for example, if Analytics ID=service experience, the MTLF determines to train a service experience model).
2. Notification target address (notification target address): notifies a target address of a model, that is, a target to which the model is notified.
3. Model filter information (ML model filter information): indicates a range of data that needs to be collected for training a model.
4. Target of model reporting (target of ML model reporting): indicates a terminal device for which a model is intended, that is, an object for requesting the model.
5. Model reporting information (ML model reporting information): indicates a condition for reporting a model, for example, indicates immediate reporting, periodic reporting, and reporting when a threshold is reached.
6. Model interoperability information (ML model interoperability information): used for cross-vendor model sharing. When an NWDAF network element that requests a model and an NWDAF network element that provides the model belong to different vendors, this parameter needs to be carried in the request message, to help a model provider determine whether to provide a model.
7. Multi-model indication information (Indication of supporting multiple ML models): indicates that the MTLF may provide a plurality of models.
8. Expected model accuracy level (Accuracy level of Interest): indicates an accuracy level of a model expected by the NWDAF service consumer.

Step 2: The NWDAF containing MTLF sends a notification message to the NWDAF service consumer, where the notification message includes the following information:
1. Analytics ID and one or more groups of information corresponding to the analytics ID, where each group of information includes one model identifier and model information corresponding to the model identifier (Analytics ID, one or more tuples of unique ML Model identifier and ML Model Information), where the model information includes a model file address, for example, a uniform resource locator (uniform resource locator, URL) address or a fully qualified domain name (fully qualified domain name, FQDN) address.
2. Validity period (Validity period): indicates a time period for which a model is applicable.
3. Spatial validity (Spatial validity): indicates an area to which a model is applicable.

Currently, a model trained by the MTLF is usually for generating a statistical and/or predictive analytics result, for example, a statistical result of network element load and a predictive result of application service experience, and does not support terminal device positioning.

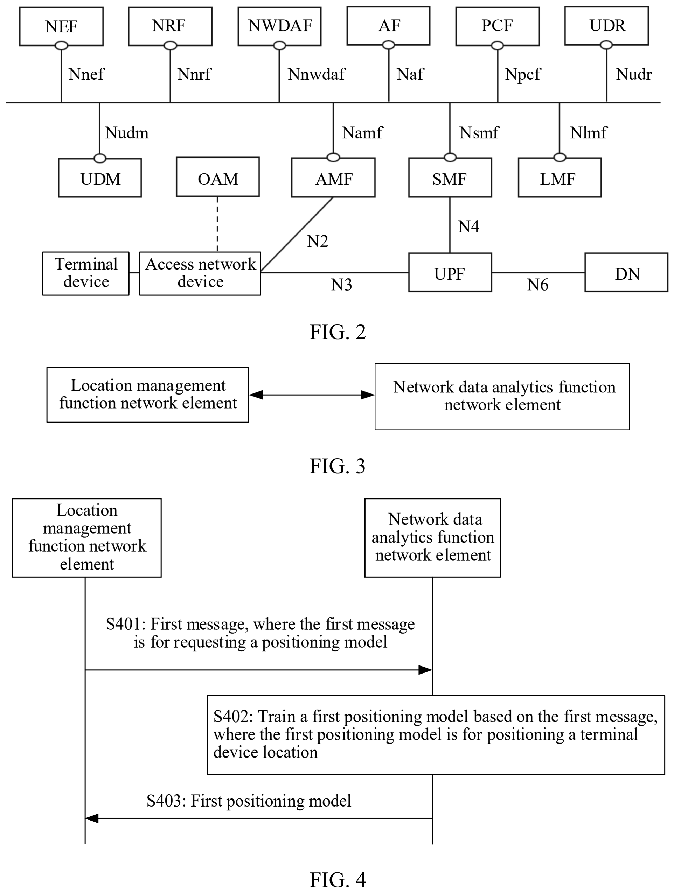

3. 5th generation (5G) network architecture based on a service-oriented interface:
Currently, a 5G network architecture based on a service-oriented interface defined by the 3rd generation partnership project (3rd generation partnership project, 3GPP) is shown in FIG. 2, and mainly includes the following network functions and entities: a terminal device, an access network (access network, AN) device, a user plane function (user plane function, UPF) network element, a data network (data network, DN), an access and mobility management function (access and mobility management function, AMF) network element, a session management function (session management function, SMF) network element, an LMF network element, a policy control function (policy control function, PCF) network element, an application function (application function, AF) network element, a network exposure function (network exposure function, NEF) network element, a network data analytics function (network data analytics function, NWDAF) network element, a network repository function (network Repository Function, NRF) network element, a unified data management (unified data management, UDM) network element, a unified data repository (unified data repository, UDR) network element, and the like. Optionally, an operations, administration and management (that is, a network management system) (operations, administration and management, OAM) network element may further be included.

The terminal device, the access network device, the UPF network element, and the DN are usually referred to as user plane network functions and entities. Data traffic of a user may be transmitted by using a protocol data unit (protocol data unit, PDU) session established between the terminal device and the DN. The data traffic is transmitted by using two network function entities: the access network device and the UPF network element. Other parts are referred to as control plane network functions and entities, and are mainly responsible for functions such as authentication and authorization, access and mobility management, session management, and policy control, to implement user access, session establishment, and reliable and stable transmission of user plane traffic.

The following briefly describes the network elements mainly included in the 5G network architecture based on the service-oriented interface.

The terminal device may be a user-side device having a wireless transceiver function. The terminal device may also be referred to as user equipment (user equipment, UE), a terminal (terminal), an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like.

For example, the terminal device may be an uncrewed aerial vehicle, an internet of things (internet of things, IoT) device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

Access network device: The access network device may be an apparatus that is deployed in an access network and that provides a communication function for a terminal. The access network device may be a radio access network (Radio Access Network, RAN) device, a wired access network device, a non-3GPP access network device, a 3GPP access network device, or the like. The access network device may include various types of base stations (Base Stations, BS). For example, the access network device may include various forms of macro base stations, micro base stations, picocell base stations, femto base stations, relay stations, access points, remote radio units (remote radio units, RRUs), radio heads (radio heads, RHs), and remote radio heads (remote radio heads, RRHs). In systems using different radio access technologies, names of the access network device may be different. For example, the access network device is referred to as a NodeB (NodeB, NB) in a 3G network, is referred to as an evolved NodeB (evolved NodeB, eNB or eNodeB) in a long term evolution (long term evolution, LTE) network, and may be referred to as a next generation NodeB (the next Generation NodeB, gNB or gNodeB) or new radio NodeB (new radio NodeB, NR NB) in a 5G network. In some scenarios, the access network device may include a central unit (Central Unit, CU) and/or a distributed unit (Distributed Unit, DU). The CU and the DU may be deployed in different places. For example, the DU is deployed in a high-traffic area, and the CU is deployed in a central equipment room. Alternatively, the CU and the DU may be deployed in a same equipment room. The CU and the DU may alternatively be different components in a same rack.

The LMF network element is mainly responsible for managing overall coordination and scheduling of resources required for a location of a terminal device that is registered with or accesses a 5G core network, and may calculate or verify an estimated location, speed, or the like of the terminal device.

The AMF network element is mainly responsible for signaling processing, for example, functions such as access control, mobility management, attachment and detachment, and gateway selection. The AMF network element may further transmit a location service message between the terminal device and the LMF network element and between the access network device and the LMF.

The SMF network element is mainly responsible for session management (such as session establishment, modification, and release), IP address allocation and management, selection and control of a UPF network element, and the like.

The PCF network element is mainly responsible for providing a policy control decision, providing a policy rule for a control plane function, and providing a traffic-based charging control function. The NWDAF network element is mainly responsible for functions such as data collection, model training, data analytics, and model inference, and may be configured to: collect related data from a network element, a third-party service server, a terminal device, or a network management system, perform data analytics or model training based on the related data, and provide a data analytics result for the network element, the third-party service server, the terminal device, or the network management system, or provide a trained model for another data analytics function network element.

The AF network element is mainly responsible for transferring a requirement of an application side for a network side, for example, a quality of service (quality of service, QoS) requirement or user status event subscription. The AF network element may be a third-party function entity or an application server deployed by an operator.

The UPF network element is mainly responsible for forwarding and receiving user data in a terminal device.

The NEF network element is mainly responsible for managing externally exposed network data. The NRF network element is mainly responsible for performing registration, state monitoring, and the like on a network function service, to implement automatic management, selection, and scalability of the network function service, and allow each network function to discover a service provided by another network function.

The OAM network element mainly completes daily analysis, prediction, planning, and configuration of network and services, and for testing and fault management of the networks and the services thereof. The OAM network element may interact with the access network device, to obtain terminal device location information on an access network device side that is measured by the access network device or that is measured and reported by a terminal device.

The UDM network element is mainly responsible for performing subscription management, access authorization, authentication information generation, and the like for a user.

The UDR network element is mainly responsible for providing a capability of storing subscription data, policy data, and capability exposure related data.

In addition, FIG. 2 further shows interaction relationships between the network functions and entities and corresponding interfaces. As shown in FIG. 2, the terminal device accesses a 5G network via the access network device, the access network device communicates with the AMF network element through an N2 interface (N2 for short), the access network device communicates with the UPF network element through an N3 interface (N3 for short), the SMF network element communicates with the UPF network element through an N4 interface (N4 for short), and the UPF network element accesses the DN through an N6 interface (N6 for short). In addition, the network functions such as the AMF network element, the SMF network element, the NEF network element, the NRF network element, the PCF network element, the UDM network element, the UDR network element, or the AF network element shown in FIG. 2 interact with each other through service-oriented interfaces. For example, a service-oriented interface exposed by the AMF network element is Namf, a service-oriented interface exposed by the SMF network element is Nsmf, a service-oriented interface exposed by the NEF network element is Nnef, a service-oriented interface exposed by the NRF network element is Nnrf, a service-oriented interface exposed by the PCF network element is Npcf, a service-oriented interface exposed by the UDM network element is Nudm, a service-oriented interface exposed by the UDR network element is Nudr, a service-oriented interface exposed by the AF network element is Naf, a service-oriented interface exposed by the NWDAF network element is Nnwdaf, and a service-oriented interface exposed by the LMF network element is N1mf.

It can be learned from the foregoing descriptions of the conventional technology that, in an existing AI positioning method, an LMF network element needs to obtain location information of a terminal device through inference based on a locally deployed AI/ML model and measurement data collected from the terminal device/access network device. However, the LMF may be incapable of training an AI model. However, although an NWDAF network element may train the AI/ML model and send the AI/ML model to another NWDAF network element, currently, the NWDAF network element does not support training of a positioning model, cannot collect positioning-related training data, and cannot provide the AI/ML model for the LMF network element. Therefore, in the existing AI positioning method, the LMF can obtain the location information of the terminal device through inference based only on the locally deployed AI/ML model.

It can be learned that the existing AI positioning method has the following problems: Requirements on a positioning model for obtaining high-accuracy location information of a terminal device in different environments are different. The AI/ML model locally deployed by the LMF network element is preconfigured in the LMF network element, and the LMF network element may not be capable of training an AI/ML model that meets a current environment requirement. Therefore, as an environment changes, the AI/ML model locally deployed by the LMF may not meet a positioning requirement in the current environment, and high-accuracy location information of the terminal device cannot be obtained.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding. In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of various pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

In embodiments of this application, "defining in advance", "predefining", "configuring in advance ", or "preconfiguring" may be implemented by pre-storing corresponding code or a corresponding table in a device, or in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) mobile communication system and an evolved system of 5G, a vehicle-to-everything (vehicle-to-everything, V2X) system, an LTE and NR hybrid networking system, a device-to-device (device-to-device, D2D) system, a machine-to-machine (machine-to-machine, M2M) communication system, the internet of things (internet of things, IoT), another next-generation communication system, and the like.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For example, FIG. 3 shows a communication system to which the solutions of this application are applicable according to this application. The communication system may include at least one location management function network element and at least one network data analytics function network element.

Optionally, the communication system may further include a terminal device, an access network device, a network management network element, a session management network element, an access and mobility management function network element, an application function network element, a unified data management function network element, a unified data repository network element, and the like.

Optionally, in a 5G communication system, the location management function network element may be an LMF network element. In a future communication system such as a 6G communication system, the location management function network element may still be an LMF network element, or may have another name. This is not limited in embodiments of this application.

Optionally, in a 5G communication system, the network data analytics function network element may be an NWDAF network element. In a future communication system such as a 6G communication system, the network data analytics function network element may still be an NWDAF network element, or may have another name. This is not limited in embodiments of this application.

Similarly, for names of the network management network element, the session management network element, the access and mobility management function network element, the application function network element, the unified data management function network element, or the unified data repository network element in the 5G system, refer to the foregoing descriptions of the network elements in the 5G network architecture. In a future communication system such as a 6G communication system, these network elements may still reuse the names in the 5G system, or may have other names. This is not limited in embodiments of this application.

Optionally, for descriptions of product forms of the terminal device and the access network device, refer to the foregoing descriptions of the terminal device and the access network device in the 5G network architecture. Details are not described herein again.

The 5G communication system is used as an example. A diagram of a possible network architecture corresponding to the communication system shown in FIG. 3 to which embodiments of this application are applicable may be shown in FIG. 2.

It should be noted that the communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

With reference to the communication system shown in FIG. 3, the following describes a model obtaining method provided in an embodiment of this application.

It should be noted that in the following embodiments of this application, a name of a message between network elements, a name of each parameter, a name of each piece of information, or the like is merely an example, and may be another name in another embodiment. This is not specifically limited in the method provided in this application.

It may be understood that, in embodiments of this application, each network element or entity may perform some or all of the steps in embodiments of this application. These steps or operations are merely examples. In embodiments of this application, other operations or variations of the operations may be further performed. In addition, the steps may be performed in a sequence different from that presented in embodiments of this application, and not all the operations in embodiments of this application may be necessarily performed.

For example, a method provided in the following embodiments of this application may be applied to positioning of a terminal device, for example, may be applied to a scenario in which a location management function network element positions a terminal device. Certainly, an application scenario of this application is merely described herein as an example. The application scenario does not constitute any limitation on this application, and an application scenario of the method provided below is not specifically limited in this application either.

Refer to FIG. 4. A model obtaining method provided in an embodiment of this application includes steps S401 to S403.

S401: A location management function network element sends a first message to a network data analytics function network element, where the first message is for requesting a positioning model. Correspondingly, the network data analytics function network element receives the first message. S402: The network data analytics function network element trains a first positioning model based on the first message, where the first positioning model is for positioning a terminal device location. S403: The network data analytics function network element sends the first positioning model to the location management function network element, and correspondingly, the location management function network element receives the first positioning model from the network data analytics function network element.

Based on this solution, the location management function network element may obtain a trained positioning model from the network data analytics function network element, and does not need to use only a locally deployed positioning model, so that the location management function network element can select a model more suitable for a current environment, to achieve a better positioning effect.

The following separately describes S401 to S403 in detail.

In S401, optionally, the first message may include model requirement information, and the model requirement information indicates a requirement of the location management function network element on the positioning model. It may be understood that the network data analytics function network element may train, based on the model requirement information, a positioning model that meets the requirement indicated by the model requirement information.

For example, the model requirement information may be a model requirements profile (Model requirements profile) parameter included in the first message.

Optionally, the model requirement information may include at least one of the following information:
1. Model algorithm requirement information: indicates a requirement for an algorithm used for the positioning model. Optionally, one or more required model algorithms may be indicated. For example, algorithms such as convolutional neural network (Convolutional Neural Network, CNN), recurrent neural network (Recurrent Neural Network, RNN), residual neural network (residual network, ResNet), and long short-term memory (Long Short-Term Memory, LSTM) may be indicated. The network data analytics function network element may train the positioning model by using any model algorithm required by the model algorithm requirement information.
2. Model input requirement information: indicates a requirement on input data of the positioning model. The input data may be training data, test data, validation data, or inference data. The network data analytics function network element may train, based on the model input requirement information, a model that meets an input requirement.

Optionally, the model input requirement information may indicate one or more types of input data, for example, may indicate data of a type such as a channel impulse response (channel impulse response, CIR), a channel energy response (channel energy response, CER), or a channel power delay profile (power delay profile, PDP).

Optionally, the model input requirement information may indicate one or more features of the input data, for example, may indicate at least one of an input file type (for example, json, xls, or dat), an input data format (for example, a value, a character, or a binary number), an input data dimension (for example, the input data dimension being 10 dimensions indicates that 10 values/characters/binary numbers need to be input in parallel each time), or a data length (for example, a length of a binary number is 10 bits).

In a possible implementation, the model input requirement information may include specific event identifier (Event ID) information. The location management function network element and the network data analytics function network element may preconfigure a correspondence between event identifier information and one or more types of data, so that the location management function network element may send the event identifier information, to indicate that training data of the positioning model needs to be input. For example, it is assumed that event identifier information 1 corresponds to the CIR and the CER, and event identifier information 2 corresponds to the PDP. If the location management function network element sends the event identifier information 1 to the network data analytics function network element, the network data analytics function network element may determine, based on the event identifier information 1, that input data that needs to be input into the positioning model includes the CIR and the CER.

In a possible implementation, the model input requirement information may include feature identification information. The location management function network element and the network data analytics function network element may preconfigure a correspondence between feature identification information and one or more data features, so that the location management function network element can indicate a requirement for a feature of the input data of the positioning model by sending the feature identification information. For example, it is assumed that feature identification information 1 corresponds to the following features: an input file type is json, an input data format is binary, an input data dimension is 10 dimensions, and an input data length is 10 bits. If the location management function network element sends the feature identification information 1 to the network data analytics function network element, the network data analytics function network element may determine, based on the feature identification information 1, different feature information of the input data that needs to be input into the positioning model. Optionally, the event identifier information and the feature identification information included in the model input requirement information may be same identification information. In other words, the identification information corresponds to one or more data types and one or more data features. The network data analytics function network element may determine, based on the identification information, a type and a feature of the input data that needs to be input into the positioning model. Alternatively, the event identifier information and the feature identification information included in the model input requirement information may be different identification information.

3. Model output requirement information: indicates a requirement for an output result of the positioning model. The network data analytics function network element may train, based on the model output requirement information, a positioning model that can output a required output result. Optionally, the model output requirement information may indicate a type of data output by the positioning model, for example, may indicate the positioning model to output location (UE location) information of a terminal device, or may indicate the positioning model to output timing estimation (timing estimation) information of the terminal device.

Optionally, the model output requirement information may indicate one or more features of the data output by the positioning model, for example, may indicate an output file type (for example, json, xls, or dat), an output data format (for example, a value, a character, or a binary number), an output data dimension (for example, the output data dimension being 10 dimensions indicates that 10 values/characters/binary numbers need to be output in parallel each time), or a data length (for example, a length of a binary number is 10 bits).

In a possible implementation, the model output requirement information may include event identifier information and/or feature identification information. The event identifier information corresponds to one or more types of model output data, and the feature identification information corresponds to a feature of one or more pieces of model output data. The location management function network element may indicate a requirement for the output result of the positioning model by sending the event identifier information and/or the feature identification information. For details, refer to the foregoing descriptions of the model input requirement information. Details are not described herein again.

4. Model complexity requirement information: indicates a complexity requirement for the positioning model. Optionally, the model complexity requirement information may indicate a requirement for at least one of a model size, a quantity of model layers, and a quantity of model parameters. For example, the model complexity requirement information may indicate that a model size needs to be less than 100 Kbit, may indicate that a quantity of model layers needs to be greater than 18 and less than 128, and/or may indicate that a quantity of model parameters is less than 106.

5. Calculation complexity requirement information: indicates a requirement for a calculation amount required by the positioning model. For example, the calculation complexity requirement information may indicate that a calculation amount required by the positioning model needs to be less than 108 floating point operations (floating point operations, FLOPs).

6. The model accuracy requirement information: indicates a requirement for accuracy of the positioning model. For example, the model accuracy requirement information may indicate that a probability that a positioning error of the positioning model is less than 0.5 m is required to be 90%. That is, a positioning model whose probability that a positioning error is less than 0.5 m is greater than or equal to 90% is a positioning model that meets a model accuracy requirement.

7. Model structure requirement information: indicates a requirement of the location management function network element for a model structure of the positioning model. The network data analytics function network element may determine, based on an indication of the model structure requirement information, a model structure of a to-be-trained positioning model.

Optionally, the model structure requirement information may indicate a model structure of a positioning model required by the location management function network element.

Optionally, the model structure requirement information may indicate one or more model structures. When the model structure requirement information indicates a plurality of model structures, the network data analytics function network element may determine any one of the plurality of indicated model structures as the model structure of the to-be-trained positioning model.

Optionally, the model structure requirement information may be identification information of a structure type required by the location management function network element. In this implementation, the location management function network element and the network data analytics function network element may preconfigure a correspondence between identification information of a structure type and the corresponding structure type, so that the network data analytics function network element may determine the model structure of the to-be-trained positioning model based on identification information of a structure type sent by the location management function network element.

For example, the model structure indicated by the model structure requirement information may include three model structures shown in FIG. 1: a model structure 1 (same model for N TRPs), a model structure 2 (N models for N TRPs), and a model structure 3 (one model for N TRPs). If the model structure requirement information indicates the model structure 1, the network data analytics function network element may determine, based on the model structure requirement information, that one positioning model needs to be trained, and an input of the positioning model to be trained is a measurement result of a single TRP. If the model structure requirement information indicates the model structure 2, the network data analytics function network element may determine, based on the model structure requirement information, that N (N is a positive integer greater than 1) positioning models need to be trained, an input of a single positioning model in the N positioning models is a measurement result of a single TRP, and inputs of different positioning models correspond to measurement results of different TRPs. If the model structure requirement information indicates the model structure 3, the network data analytics function network element may determine, based on the model structure requirement information, that one positioning model needs to be trained, and an input of the positioning model to be trained is measurement results of N TRPs.

Optionally, the model structure requirement information may further indicate a quantity of positioning models corresponding to the model structure. For example, if the model structure indicated by the model structure requirement information is the model structure 1 or the model structure 2 shown in FIG. 1, the model structure requirement information may further indicate a value of N.

8. Model generalization capability requirement information: indicates a requirement of the location management function network element for a model generalization capability of the positioning model. The network data analytics function network element may determine, based on the model generalization capability requirement information, whether the model generalization capability of the positioning model trained by the network data analytics function network element meets a requirement of the location management function network element. Further, if the positioning model trained by the network data analytics function network element does not meet the model generalization capability required by the model generalization capability requirement information, the network data analytics function network element may continue to train the positioning model until the positioning model obtained through training meets the model generalization capability required by the model generalization capability requirement information.

The model generalization capability is for measuring whether a model can provide proper outputs for different input data. In a possible implementation, the model generalization capability may be measured by performance of the model in different test data sets. A model with a good generalization capability needs to have good performance in different test data sets. A model with a poor generalization capability may have good performance in a test data set but poor performance in another test data set.

Optionally, the model generalization capability requirement information may include information indicating a model performance requirement of the location management function network element for the positioning model in different test data sets.

For example, the model performance may include at least one of the following: model accuracy (or referred to as model accuracy) (accuracy), an error rate (error rate), precision (precision), a recall (recall) rate, a mean square error (mean square error, MSE), a mean absolute error (mean absolute error, MAE), a root mean squared error (Root Mean Squared Error, RMSE), or the like. Optionally, the location management function network element may provide different corresponding test data sets for the network data analytics function network element. Alternatively, the network data analytics function network element may obtain different corresponding test data sets in another manner. For example, the network data analytics function network element may request the different corresponding test data sets from another network element.

For example, the different test data sets may be test data sets at different terminal device transmit power, may be test data sets at different network synchronization errors, may be test data sets at different terminal device timing errors, or may be test data sets in different target deployment environments. The target deployment environment is a specific environment in which the positioning model may be deployed. Optionally, test data sets in different target deployment environments may correspond to different fine-tuning (tuning) training data sets, and the fine-tuning training data set is a training data set from a target deployment environment of the positioning model.

The following uses an example in which the model generalization capability is measured by using model accuracy in different test data sets, to describe four possible cases in which the model generalization capability requirement information indicates a requirement for the model generalization capability of the positioning model.
(1) The model generalization capability requirement information may indicate a requirement for model accuracy of the model in test data sets corresponding to different terminal device transmit power. In a possible implementation, the model generalization capability requirement information may include a parameter indicating terminal device transmit power and corresponding model accuracy. It is assumed that the parameter is a List of <UE power, accuracy requirements> parameter (or the parameter may be in another form, which is not limited in this embodiment of this application). For example, when the UE power is 3 and the accuracy requirements is 96%, it indicates that model accuracy is required to be not less than 96% when terminal device transmit power is 3 dBm; when the UE power is 23 and the accuracy requirements is 97%, it indicates that model accuracy is required to be not less than 97% when terminal device transmit power is 23 dBm. The network data analytics function network element may measure, based on the model generalization capability requirement information, the model accuracy of the trained positioning model in a test data set corresponding to the terminal device transmit power being 3 dBm and the model accuracy of the positioning model in a test data set corresponding to the terminal device transmit power being 23 dBm, and determine whether model accuracy of the positioning model in different test data sets meets a requirement of the model generalization capability requirement information.
   Optionally, the location management function network element may further provide a corresponding test data set for the network data analytics function network element. For example, a test data set corresponding to the terminal device transmit power being 3 dBm and a test data set corresponding to the terminal device transmit power being 23 dBm may be provided.
(2) The model generalization capability requirement information may indicate a requirement for model accuracy of the model in test data sets corresponding to different network synchronization errors. In a possible implementation, the model generalization capability requirement information may include a parameter indicating a network synchronization error and corresponding model accuracy. It is assumed that the parameter is a List of <network synchronization error, accuracy requirements> parameter (or the parameter may be in another form, which is not limited in this embodiment of this application). For example, when the network synchronization error is 2 and the accuracy requirements is 96%, it indicates that model accuracy is required to be not less than 96% when the network synchronization error is 2 ns; when the network synchronization error is 20 and the accuracy requirements is 95%, it indicates that model accuracy is required to be not less than 95% when the network synchronization error is 20 ns. The network data analytics function network element may measure, based on the model generalization capability requirement information, the model accuracy of the trained positioning model in a test data set corresponding to the network synchronization error being 2 ns and the model accuracy of the positioning model in a test data set corresponding to the network synchronization error being 20 ns, and determine whether model accuracy of the positioning model in different test data sets meets a requirement of the model generalization capability requirement information.
   Optionally, the location management function network element may further provide a corresponding test data set for the network data analytics function network element. For example, a test data set corresponding to the network synchronization error being 2 ns and a test data set corresponding to the network synchronization error being 20 ns may be provided.
(3) The model generalization capability requirement information may indicate a requirement for model accuracy of the model in test data sets corresponding to different terminal device synchronization errors. In a possible implementation, the model generalization capability requirement information may include a parameter indicating a terminal device synchronization error and corresponding model accuracy. It is assumed that the parameter is a List of <UE timing error, accuracy requirements> parameter (or the parameter may be in another form, which is not limited in this embodiment of this application). For example, when the UE timing error is 2 and the accuracy requirements is 96%, it indicates that model accuracy is required to be not less than 96% when the terminal device synchronization error is 2 ns; when the UE timing error is 20 and the accuracy requirements is 95%, it indicates that model accuracy is required to be not less than 95% when the terminal device synchronization error is 20 ns. The network data analytics function network element may measure, based on the model generalization capability requirement information, the model accuracy of the trained positioning model in a test data set corresponding to the terminal device synchronization error being 2 ns and the model accuracy of the positioning model in a test data set corresponding to the terminal device synchronization error being 20 ns, and determine whether model accuracy of the positioning model in different test data sets meets a requirement of the model generalization capability requirement information.
   Optionally, the location management function network element may further provide a corresponding test data set for the network data analytics function network element. For example, a test data set corresponding to the terminal device synchronization error being 2 ns and a test data set corresponding to the terminal device synchronization error being 20 ns may be provided.
(4) The model generalization capability requirement information may indicate a requirement for accuracy of a model obtained by retraining a model by using different fine-tuning training data sets. In a possible implementation, the model generalization capability requirement information may include a parameter indicating a model retraining data set (fine-tuning training data set) and corresponding model accuracy in a specific environment. It is assumed that the parameter is a List of <environment parameters (e.g., Area of Interest, time period), accuracy requirements> parameter (or the parameter may be in another form, which is not limited in this embodiment of this application). For example, when the area of interest is a cell 1, the time period is 10:00-11:00, and the accuracy requirements is 97%, it indicates that after a model is retrained by using a training data set collected in a network area indicated by the cell 1 in the period 10:00-11:00, model accuracy of the retrained model is required to be not less than 97%; and when the area of interest is a cell 2, the time period is 17:30-18:00, and the accuracy requirements is 98%, it indicates that after a model is retrained by using a training data set collected in a network area indicated by the cell 2 in the period 17:30-18:00, model accuracy of the retrained model is required to be not less than 98%. The network data analytics function network element may measure, based on the model generalization capability requirement information, the model accuracy obtained by retraining the trained positioning model by using the training data set collected in the network area indicated by the cell 1 in the period 10:00-11:00 and the model accuracy obtained by retraining the positioning model by using the training data set collected in the network area indicated by the cell 2 in the period 17:30-18:00, and determine whether model accuracy obtained by retraining the positioning model by using different training data sets meets the requirement of the model generalization capability requirement information.

Optionally, the location management function network element may further provide a corresponding fine-tuning training data set and a corresponding test data set for the network data analytics function network element.

It should be noted that the information such as the model algorithm requirement information or the model input requirement information described above is information that may be included in the several pieces of model requirement information provided in this embodiment of this application, and does not constitute a limitation on specific content of the model requirement information.

Optionally, the first message may include model type indication information, and the model type indication information indicates that a type of a model requested by the location management function network element is a positioning model. The network data analytics function network element may determine, based on the model type indication information, that a model that needs to be trained and to be provided for the location management function network element is a positioning model.

For example, the model type indication information may be a model type indicator (Model Type Indicator) parameter included in the first message.

Optionally, the model type indication information may be identification information of a positioning model type. In this implementation, the location management function network element and the network data analytics function network element may preconfigure a correspondence between model type identification information and a corresponding model type, so that the network data analytics function network element can determine, based on the identification information of the positioning model type sent by the location management function network element, that a type of a to-be-trained model is a positioning model.

Optionally, the first message may further include a parameter included in a model subscription request message in an existing model distribution procedure. For details, refer to the foregoing descriptions of parameters such as A list of Analytics ID(s) and Notification Target Address in the existing model distribution procedure. Details are not described herein again.

In S402, after receiving the first message, the network data analytics function network element may determine, based on the first message, the to-be-trained positioning model, to train and obtain a corresponding positioning model.

In this embodiment of this application, the positioning model obtained by the network data analytics function network element through training based on the first message may be referred to as the first positioning model. For example, the first positioning model may be an AI/ML model. Optionally, if the first message includes the model requirement information, the network data analytics function network element may train, based on the model requirement information, a positioning model that meets a requirement, to obtain the first positioning model. For details, refer to the foregoing descriptions of the model requirement information. Details are not described herein again.

Optionally, if the first message does not include the model requirement information, that is, the location management function network element does not indicate a requirement for the positioning model to the network data analytics function network element, the network data analytics function network element may autonomously train a positioning model that meets a current environment requirement, to obtain the first positioning model.

In a possible implementation, if the first message does not include the model requirement information, the first message may include second information, and the second information indicates the network data analytics function network element to autonomously train a positioning model that meets a current environment requirement. The network data analytics function network element may autonomously train, based on an indication of the received second information, the positioning model that meets the current environment requirement.

For example, the second information may be a model selection indicator (model selection indicator) parameter included in the first message.

The following describes a specific implementation in which the network data analytics function network element autonomously determines the positioning model that meets the current environment requirement.

Implementation 1: After receiving the first message, the network data analytics function network element may determine one piece of environment identification information (for ease of description, the environment identification information may be referred to as first environment identification information). The first environment identification information may be for identifying a current environment, to determine the to-be-trained positioning model based on the environment identification information.

The current environment identified by the first environment identification information may be understood as a current environment corresponding to an applicable area of the to-be-trained positioning model (that is, the positioning model requested by the location management function network element). Optionally, the applicable area of the to-be-trained positioning model may be indicated by the location management function network element to the network data analytics function network element. For example, the first message may include area of interest (area of interest, AOI) information, indicating an applicable area of the positioning model requested by the location management function network element.

It may be understood that the positioning model obtained by the network data analytics function network element through training based on the first message is referred to as the first positioning model, that is, the to-be-trained positioning model is referred to as the first positioning model after training is completed. Therefore, the first environment identification information may also be understood as being for identifying the current environment (or referred to as an environment corresponding to the first positioning model) corresponding to the applicable area of the first positioning model.

Optionally, an environment identified by the environment identification information may be classified based on a geographical feature. For example, an environment identifier 1 represents an urban canyon, an environment identifier 2 represents a plain rural area, and an environment identifier 3 represents a plateau mountainous area. Alternatively, an environment identified by the environment identification information may be classified based on a non-line-of-sight (Non-Line Of Sight, NLOS) degree. For example, an environment identifier 1 indicates a light NLOS environment, an environment identifier 2 indicates a medium NLOS environment, and an environment identifier 3 indicates a heavy NLOS environment.

For determining the first environment identification information, in a possible implementation, the network data analytics function network element may determine the first environment identification information by using measurement data related to the current environment corresponding to the applicable area of the to-be-trained positioning model. For example, the network data analytics function network element may pre-train a classification model, and an output of the classification model is a piece of environment identification information. After receiving the first message, the network data analytics function network element obtains the measurement data related to the current environment corresponding to the applicable area of the to-be-trained positioning model, and inputs one or more types of data in the obtained measurement data into the classification model. Environment identification information output by the classification model is the first environment identification information.

Optionally, in this implementation, the measurement data that is related to the current environment corresponding to the applicable area of the to-be-trained positioning model and that is obtained by the network data analytics function network element may represent information such as a geographical feature and communication quality of the current environment corresponding to the applicable area of the to-be-trained positioning model. For example, the measurement data related to the current environment corresponding to the applicable area of the to-be-trained positioning model may include at least one of the following:
channel measurement data measured in the applicable area of the to-be-trained positioning model, for example, information such as reference signal received power (reference signal received power, RSRP), reference signal received quality (reference signal received quality, RSRQ), a signal to interference plus noise ratio (signal to interference plus noise ratio, SINR), radio access network throughput for uplink and downlink (RAN Throughput for DL and UL), a radio access network packet delay for uplink and downlink (RAN Packet delay for DL and UL), and a radio access network packet loss rate for uplink and downlink (RAN Packet loss rate for DL and UL); a positioning result of the terminal device in the applicable area of the to-be-trained positioning model, and positioning-related auxiliary data and location information (for example, information such as a physical cell identifier, a global cell identifier, a downlink reference signal time difference, and downlink positioning reference signal received power); session information in the applicable area of the to-be-trained positioning model, for example, information such as a QoS flow bit rate (QoS flow Bit Rate), a QoS flow packet delay (QoS flow Packet Delay), a packet transmission (Packet transmission) quantity, and a packet retransmission (Packet retransmission) quantity; geographical environment information (representing information about a geographical environment in which the terminal device in the applicable area of the to-be-trained positioning model is currently located), for example, information about whether the terminal device is currently located indoors or outdoors, a suburban area, an urban area, or a rural area, or a plain or a mountainous area.

Optionally, in the measurement data related to the current environment corresponding to the applicable area of the to-be-trained positioning model, the channel measurement data may be obtained from a network management network element. The positioning result may be obtained from a location management function network element (which may be the location management function network element that sends the first message, or may be another location management function network element)/a gateway mobile location center (gateway mobile location center, GMLC)/an application function network element (for example, may be a third-party application function network element). The session information may be obtained from a session management network element/user plane function network element. The geographical environment information may be obtained from an application function network element (for example, may be a third-party application function network element).

Optionally, if the network data analytics function network element obtains the measurement data from the location management function network element (which may be the location management function network element that sends the first message, or may be another location management function network element), a message that is sent by the network data analytics function network element to the location management function network element and that requests the measurement data, and/or corresponding measurement data that is fed back by the location management function network element to the network data analytics function network element may be forwarded by the access and mobility management function network element.

Optionally, the positioning result may be the location information of the terminal device. In a possible implementation, the location information of the terminal device may be obtained by using a specific positioning algorithm. For example, the network data analytics function network element may send a request message to the location management function network element/gateway mobile location center. A specific positioning algorithm may be specified in the request message. The location management function network element/gateway mobile location center calculates a location of the terminal device by using the positioning algorithm, and feeds back the obtained location of the terminal device to the network data analytics function network element. Optionally, when obtaining the measurement data related to the current environment corresponding to the applicable area of the to-be-trained positioning model, the network data analytics function network element may further obtain timestamp information corresponding to the measurement data.

Optionally, the network data analytics function network element may send a request message to a corresponding network element, to request the measurement data related to the current environment corresponding to the applicable area of the to-be-trained positioning model. Correspondingly, the network element that receives the request message may send corresponding measurement data to the network data analytics function network element.

For determining the first environment identification information, in another possible implementation, the network data analytics function network element may preconfigure a correspondence between a positioning error (or referred to as positioning accuracy) of the specific positioning algorithm and environment identification information, to determine, based on the positioning error of the specific positioning algorithm, an environment identifier corresponding to the positioning error, that is, the first environment identification information.

Optionally, the network data analytics function network element may calculate the positioning error (or referred to as positioning accuracy) of the specific positioning algorithm based on the obtained specific positioning algorithm and the positioning result corresponding to the specific positioning algorithm, and at least one piece of information such as area information (indicating the applicable area of the to-be-trained positioning model), LOS/NLOS measurement information (indicating whether the positioning result is obtained based on LOS/NLOS measurement), and geographical environment information (indicating information about a geographical environment in which the terminal device in the applicable area of the to-be-trained positioning model is currently located, for example, information about whether the terminal device is currently located indoors or outdoors, a suburban area, an urban area, or a rural area, or a plain or a mountainous area). Optionally, the network data analytics function network element may obtain, from the location management function network element/gateway mobile location center/application function network element, at least one piece of information such as a specific positioning algorithm, a positioning result corresponding to the specific positioning algorithm, area information, LOS/NLOS measurement information, and geographical environment information.

For example, the network data analytics function network element trains a positioning error prediction model, where an input of the model includes information such as a positioning algorithm, a positioning result corresponding to the positioning algorithm, area information, LOS/NLOS measurement information, and geographical environment information, and an output of the model is a positioning error of the positioning algorithm. The network data analytics function network element determines, based on the positioning error of the specific positioning algorithm output by the model and a preconfigured correspondence, an environment identifier corresponding to the positioning error, that is, the first environment identification information.

It should be noted that the specific positioning algorithm described above is not specifically limited in this embodiment of this application, and may be any algorithm that can be applied to a wireless positioning scenario, for example, an algorithm such as a downlink time difference of arrival (downlink time difference of arrival, DL-TDOA) algorithm, a downlink angle-of-departure (downlink angle-of-departure, DL-AOD) algorithm, an uplink time difference of arrival (uplink time difference of arrival, UL-TDOA) algorithm, or an uplink angle-of-arrival (uplink angle-of-arrival, UL-AOA) algorithm.

In the implementation 1, for determining the to-be-trained positioning model based on the first environment identification information, in a possible implementation, the network data analytics function network element may preconfigure a mapping relationship between the environment identification information and one or more pieces of model identification information, or preconfigure a correspondence between the environment identification information and a group of model feature information. After determining the first environment identification information, the network data analytics function network element may determine, based on the preconfigured correspondence, the model identification information or the model feature information corresponding to the first environment identification information, to determine the to-be-trained positioning model based on the corresponding model identification information or the corresponding model feature information.

The model identification information is for identifying a specific model. Optionally, the model may be a model that has not been trained, and the network data analytics function network element may perform model training based on the model, to obtain the first positioning model. Alternatively, the model may be a trained model, and the network data analytics function network element may perform retraining based on the model, to obtain the first positioning model. Alternatively, the network data analytics function network element may directly use the model as the first positioning model.

The model feature information includes feature information that may represent a model, for example, features such as a model input, a model output, model complexity, and model calculation complexity. For details, refer to the foregoing descriptions of a plurality of pieces of information that may be included in the model requirement information and that indicate a requirement for a model feature.

Implementation 2: The network data analytics function network element may preconfigure a mapping relationship between a positioning error of a specific positioning algorithm and one or more pieces of model identification information, or preconfigure a mapping relationship between a positioning error of a specific positioning algorithm and a group of model feature information. The network data analytics function network element may calculate the positioning error of the specific positioning algorithm according to the foregoing method, and determine, based on the preconfigured correspondence, the model identification information or the model feature information corresponding to the positioning error, to determine the to-be-trained positioning model based on the corresponding model identification information or the corresponding model feature information. For details about the model identification information and the model feature information, refer to the foregoing descriptions of the implementation 1. Details are not described herein again.

Based on this solution, the network data analytics function network element may autonomously determine a positioning model to be provided for the location management function network element. The network data analytics function network element may collect related measurement data and determine an environment identifier of a current environment, to determine, based on the environment identifier, a model that needs to be trained. Alternatively, the network data analytics function network element may determine, based on the positioning error of the specific positioning algorithm, a model that needs to be trained. The network data analytics function network element may send, to the location management function network element, the positioning model obtained through autonomous training, thereby providing a solution to a problem that some location management function network elements cannot autonomously determine a required model.

In S403, optionally, the network data analytics function network element may send a model file of the first positioning model or a model file address of the first positioning model, for example, a URL address or an FQDN address, to the location management function network element. Optionally, the network data analytics function network element may further send the model information of the first positioning model to the location management function network element. The model information includes one or more pieces of model feature information of the first positioning model. The model feature information of the first positioning model represents a feature of the first positioning model, for example, information such as a model type, a model algorithm, a model structure, a model generalization capability, a model input, a model output, model complexity, model calculation complexity, and model accuracy of the first positioning model. For details, refer to the foregoing descriptions of the plurality of pieces of information that may be included in the model requirement information and that indicate the requirement for the model feature. Details are not described herein again.

For example, the model information may be a model information parameter in the information fed back by the network data analytics function network element to the location management function network element.

Optionally, if the first message includes the model requirement information, the model feature information of the first positioning model included in the model information may correspond to the model requirement indicated by the model requirement information. For example, if the model requirement information includes the model structure requirement information and the model generalization capability requirement information, the network data analytics function network element may feed back corresponding model structure information and corresponding model generalization capability information.

Optionally, if the first positioning model is a positioning model that is autonomously determined by the network data analytics function network element and that meets the current environment requirement, the network data analytics function may further send the first environment identification information to the location management function network element. For details about the first environment identification information, refer to the foregoing descriptions of S402. Details are not described herein again.

Further, after receiving the first positioning model, the location management function network element may position the terminal device based on an output of the first positioning model, to be specific, obtain estimated location information of the terminal device.

Optionally, the first positioning model may directly output the estimated location information of the terminal device. In this case, the first positioning model may be a D-AIML model. Alternatively, the first positioning model may output intermediate information for assisting the location management function network element in estimating the location of the terminal device. In this case, the first positioning model may be an A-AIML model.

Optionally, when the terminal device is positioned based on the first positioning model, an input of the first positioning model may be measurement data obtained by the terminal device or the access network device by measuring a reference signal, for example, data such as a CIR or a PDP. Optionally, after the location management function network element obtains the first positioning model, the location management function network element further deploys one or more other positioning models (which may be referred to as a second positioning model) in addition to the first positioning model. In other words, the location management function network element deploys a plurality of positioning models, and the plurality of positioning models include the first positioning model and one or more second positioning models. In this case, the location management function network element may select, from the plurality of positioning models, a target positioning model actually for positioning the terminal device.

Optionally, the second positioning model may be locally deployed by the location management function network element, that is, preconfigured in the location management function network element. Alternatively, the second positioning model may be sent by the network data analytics function network element to the location management function network element. Alternatively, the second positioning model may be obtained by the location management function network element from another network element. A manner of obtaining the second positioning model is not specifically limited in this embodiment of this application.

In a possible implementation, the location management function network element may select the target positioning model based on the environment identification information.

Specifically, the plurality of positioning models deployed by the location management function network element separately have corresponding environment identification information. In the plurality of positioning models, the first environment identification information corresponding to the first positioning model may be sent by the network data analytics function network element to the location management function network element. If the second positioning model is locally deployed by the location management function network element, environment identification information corresponding to the second positioning model may be configured together with the second positioning model. If the second positioning model is sent by the network data analytics function network element or another network element to the location management function network element, environment identification information corresponding to the second positioning model may be sent to the location management function network element together with the second positioning model. When preparing to select the target positioning model, the location management function network element obtains second environment identification information that is for identifying a current environment (which is a current environment of an area to which the target positioning model is to be applied), and selects, from the plurality of positioning models, a positioning model whose corresponding environment identification information is the same as the second environment identification information as the target positioning model. In addition, if there is no environment identification information that is the same as the second environment identification information in the environment identification information separately corresponding to the plurality of positioning models, the location management function network element may select, as the target positioning model, a positioning model whose environment identified by the corresponding environment identification information is close to the environment identified by the second environment identification information.

Optionally, the second environment identification information may be obtained by the location management function network element from the network data analytics function network element, the terminal device, or the access network device. In a possible implementation, the location management function network element may send a subscription message to the network data analytics function network element, the terminal device, or the access network device, where the subscription message is for requesting to feed back environment identification information. The network data analytics function network element, the terminal device, or the access network device may feed back the second environment identification information based on the subscription information. Optionally, the subscription message may include some filtering information, for example, information indicating a specific area (that is, the area to which the target positioning model is to be applied) or a time period, and may indicate to obtain an environment identifier that identifies an environment of the specific area within specific time. Optionally, the subscription information may further include a condition for feeding back the environment identification information. For example, the environment identification information is fed back periodically or when a specific condition (for example, the determined environment identifier is a specific environment identifier) is met.

For a specific implementation of determining the second environment identification information, refer to the foregoing descriptions of determining the first environment identification information by the network data analytics function network element. Details are not described herein again. Based on this solution, if a plurality of positioning models have been deployed on the location management function network element, the location management function network element may obtain, from another network element, the environment identification information that identifies the current environment, and select, based on the environment identification information, a positioning model applicable to the current environment for positioning.

In another possible implementation, the location management function network element may select the target positioning model based on the positioning error of the specific positioning algorithm.

Specifically, the plurality of positioning models deployed by the location management function network element each have corresponding positioning error information of a specific positioning algorithm. The first positioning model in the plurality of positioning models and a positioning error of a specific positioning algorithm may be sent by the network data analytics function network element to the location management function network element. If the second positioning model is locally deployed by the location management function network element, a positioning error of a specific positioning algorithm corresponding to the second positioning model may be configured together with the second positioning model. If the second positioning model is sent by the network data analytics function network element or another network element to the location management function network element, a positioning error of a specific positioning algorithm corresponding to the second positioning model may be sent to the location management function network element together with the second positioning model. When preparing to select the target positioning model, the location management function network element may calculate a positioning error of a specific positioning algorithm in a current environment (that is, a current environment of an area to which the target positioning model is to be applied), and select, as the target positioning model from the plurality of positioning models, a positioning model whose positioning error of a corresponding specific positioning algorithm has a minimum deviation with the positioning error of the specific positioning algorithm in the current environment.

For specific implementations of the positioning error of the specific positioning algorithm corresponding to the positioning model and calculating the positioning error of the specific positioning algorithm in the current environment, refer to the foregoing descriptions in the specific implementation of autonomously determining, by the network data analytics function network element, the positioning model that meets the current environment requirement. Details are not described herein again.

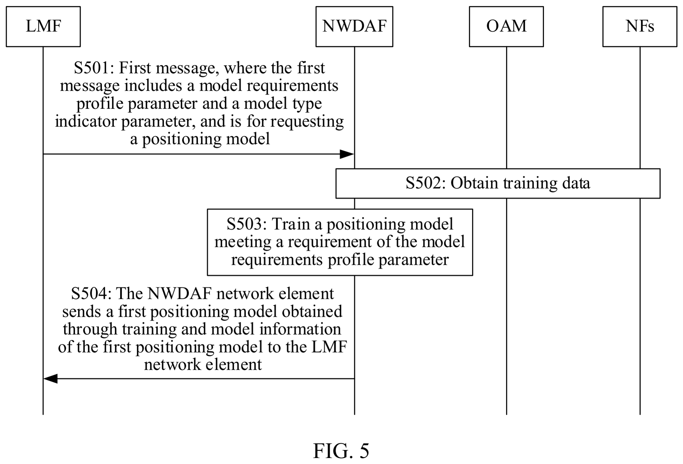

Based on this solution, if a plurality of positioning models have been deployed on the location management function network element, the location management function network element may select, based on a positioning error of a specific positioning algorithm in a current environment and a positioning error of a specific positioning algorithm corresponding to each of the plurality of positioning models, a positioning model applicable to the current environment for positioning. It is assumed that the foregoing embodiment is applied to a 5G system. In this case, the location management function network element is an LMF network element, the network data analytics function network element is an NWDAF network element, the network management network element is an OAM network element, the application function network element is an AF network element, and the access and mobility management function network element is an AMF network element. In this scenario, an example procedure in which the LMF network element obtains a positioning model from the NWDAF network element may be shown in FIG. 5, and includes the following steps.

S501: The LMF network element sends a first message to the NWDAF network element, where the first message is for requesting a model. The first message may include a model requirements profile parameter and a model type indicator parameter. The model requirements profile parameter indicates a requirement of the LMF network element on a positioning model. The model type indicator parameter indicates that a type of a model requested by the LMF network element is the positioning model.

For details about S501, refer to the foregoing descriptions of S401. Details are not described herein again.

S502: The NWDAF network element obtains training data from the OAM network element/another network function (Network Function, NF).

Optionally, for S502, refer to an existing method for obtaining training data by the NWDAF network element. Details are not described herein. Alternatively, for S502, refer to a method for obtaining, by a network data analytics function network element, training data that is for training a positioning model described below, and a specific implementation thereof is described below. Details are not described herein.

S503: The NWDAF network element trains a positioning model, namely, a first positioning model, meeting a requirement of the model requirements profile parameter.

For details about S503, refer to the foregoing descriptions of S402. Details are not described herein again.

S504: The NWDAF network element sends, to the LMF network element, the first positioning model obtained through training (for example, sending an address of a model file, or sending a model file) and model information (model information) of the first positioning model.

For details about S504, refer to the foregoing descriptions of S403. Details are not described herein again.

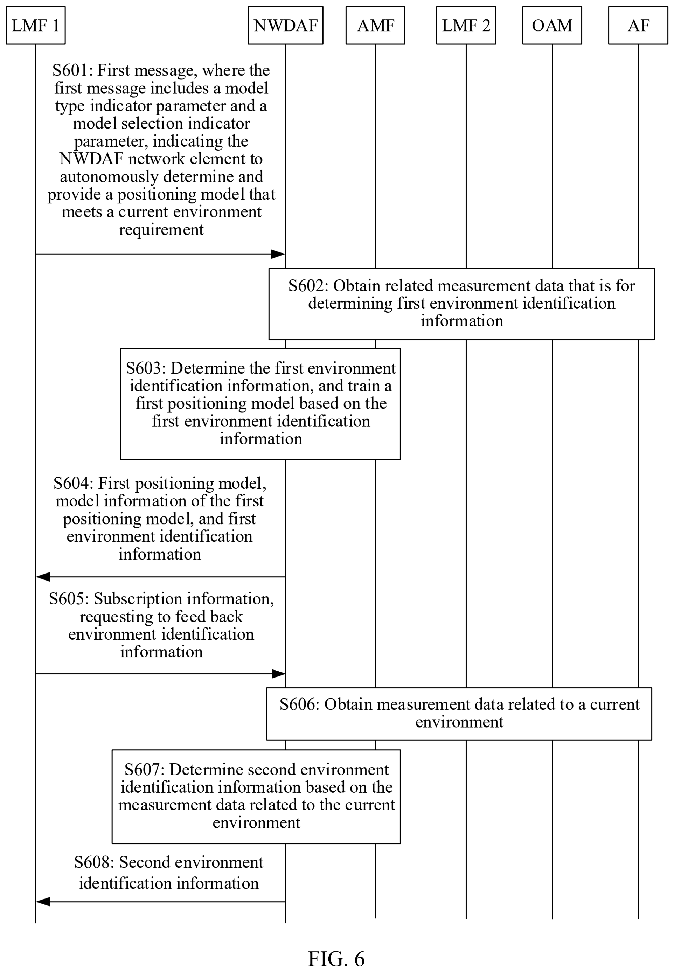

Alternatively, another example procedure in which the LMF network element obtains a positioning model from the NWDAF network element may be shown in FIG. 6, and includes the following steps.

S601: An LMF network element 1 sends a first message to the NWDAF network element, where the first message is for requesting a model. The first message may include a model type indicator parameter and a model selection indicator parameter. The model type indicator parameter indicates that a type of the model requested by the LMF network element is a positioning model. The model selection indicator parameter indicates the NWDAF network element to autonomously determine and provide a positioning model that meets a current environment requirement.

For details about S601, refer to the foregoing descriptions of S401. Details are not described herein again.

S602: The NWDAF network element obtains, from an OAM network element/an LMF network element 2/an AF network element, related measurement data that is for determining first environment identification information. The LMF network element 2 and the LMF network element 1 may be a same network element, or may be different network elements. When the LMF network element 2 and the LMF network element 1 are different network elements, the NWDAF may alternatively obtain, from both the LMF network element 1 and the LMF network element 2, the related measurement data that is for determining the first environment identification information.

Optionally, a message sent by the NWDAF network element to the LMF network element 2 for requesting the related measurement data, and/or the related measurement data sent by the LMF network element 2 to the NWDAF network element may be forwarded by an AMF network element.

S603: The NWDAF network element determines the first environment identification information, and trains a first positioning model based on the first environment identification information. For S602 and S603, refer to the foregoing descriptions of S403. Details are not described herein again.

S604: The NWDAF network element sends the first positioning model obtained through training, the model information of the first positioning model, and the first environment identification information to the LMF network element 1.

For details about S604, refer to the foregoing descriptions of S403. Details are not described herein again.

S605: The LMF 1 network element sends subscription information to the NWDAF network element, to request to feed back environment identification information.

S606: The NWDAF network element obtains measurement data related to the current environment from the OAM network element/the LMF network element 2/the AF network element.

Optionally, a message sent by the NWDAF network element to the LMF network element 2 for requesting the related measurement data, and/or the related measurement data sent by the LMF network element 2 to the NWDAF network element may be forwarded by an AMF network element.

S607: The NWDAF network element determines second environment identification information based on the obtained measurement data related to the current environment.

S608: The NWDAF network element sends the second environment identification information to the LMF network element 1.

For details of S605 to S608, refer to the foregoing descriptions of selecting the target positioning model by the location management function network element based on the second environment identification information. Details are not described herein again.

The foregoing describes the method for obtaining, by the location management function network element, the positioning model from the network data analytics function network element. In addition, an embodiment of this application further provides a method for obtaining, by a network data analytics function network element, training data that is for training a positioning model. Optionally, the method for obtaining the training data by the network data analytics function network element provided in this embodiment of this application may be applied in combination with the method for obtaining the positioning model by the location management function network element from the network data analytics function network element in the foregoing embodiment. In this case, after receiving the first message, the network data analytics function network element may perform the training data obtaining method in the following embodiment to obtain the training data to train the positioning model. Alternatively, the method for obtaining the training data by the network data analytics function network element provided in this embodiment of this application may be applied independently of the method for obtaining the positioning model by the location management function network element from the network data analytics function network element in the foregoing embodiment.

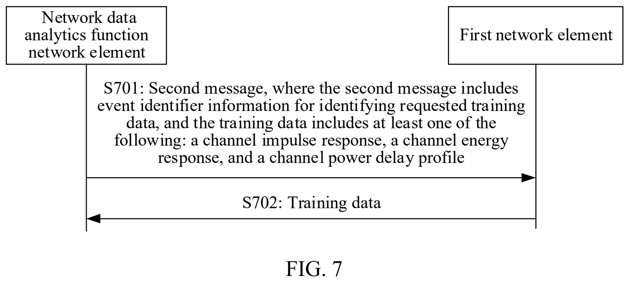

Refer to FIG. 7. A training data obtaining method provided in an embodiment of this application includes steps S701 and S702.

S701: A network data analytics function network element sends a second message to a first network element, and correspondingly, the first network element receives the second message. The second message is for requesting training data, the second message includes event identifier information, the event identifier information is for identifying the requested training data, and the training data includes at least one of the following: a channel impulse response, a channel energy response, and a channel power delay profile.

In S701, optionally, the first network element may be a location management function network element, a network management network element, a session management function network element, an access and mobility management function network element, or an application function network element, or may be another network element.

In a possible implementation, the first network element and the network data analytics function network element may preconfigure a correspondence between the event identifier information and one or more types of data, so that the network data analytics function network element may request training data of a corresponding type from the first network element by sending the event identifier information. For example, it is assumed that event identifier information 1 corresponds to a CIR and a CER, and event identifier information 2 corresponds to a PDP. If the second message sent by the network data analytics function network element to the first network element includes the event identifier information 1, the first network element may determine, based on the event identifier information 1, that the data requested by the network data analytics function network element includes the CIR and the CER, to feed back corresponding data to the network data analytics function network element.

Optionally, the second message may include area information, indicating to obtain training data in a specific area. Optionally, if the training data obtaining method shown in FIG. 7 is applied in combination with the model obtaining method shown in FIG. 4, an area corresponding to the area information included in the second message may be an applicable area of a to-be-trained positioning model of the network data analytics function network element.

S702: The first network element sends the training data to the network data analytics function network element, and correspondingly, the network data analytics function network element receives the training data from the first network element.

Based on this embodiment of this application, a method for obtaining, by the network data analytics function network element, at least one of the channel impulse response, the channel energy response, and the channel power delay profile as training data of a positioning model is provided. The network data analytics function network element may train the positioning model based on the obtained data, to improve model accuracy of the positioning model.

In S702, after receiving the second message, the first network element obtains the corresponding training data based on the event identifier information in the second message, and sends the obtained training data to the network data analytics function network element.

Optionally, in the training data sent by the first network element, one piece of training data may be associated with identification information (for example, a UE ID) of one terminal device and one timestamp, indicates a measurement result of the terminal device at a moment corresponding to the timestamp.

Optionally, the first network element may send one or more groups of training data to the network data analytics function network element. One group of training data may include one or more pieces of training data. In a possible implementation, the training data may be grouped based on identification information of an associated terminal device. For example, training data associated with a same UE ID is in a same group.

Optionally, if the first network element is a location management function network element, after receiving the second message, the location management function network element may obtain the training data from the terminal device by using the LTE positioning protocol (LTE positioning protocol, LPP). Alternatively, the location management function network element may obtain the training data from an access network device by using the NR positioning protocol A (NR Positioning Protocol A, NRPPa).

Optionally, if the first network element is a network management network element, the network management network element may obtain the training data from the access network device by using a procedure such as minimization of drive tests reporting (minimization of drive tests reporting, MDT reporting).

Optionally, if the first network element is a session management network element, the session management network element may obtain the training data from the terminal device or the access network device by using a service request (service request, SR) procedure or a PDU session establishment/modification/release procedure.

Optionally, if the first network element is an access and mobility management function network element, the access and mobility management function network element may obtain the training data from the terminal device or the access network device by using a terminal device configuration update procedure or a terminal device capability reporting procedure.

Optionally, if the first network element is an application function network element, the application function network element may obtain the training data from the terminal device by using an application (application) on the terminal device.

Optionally, if the training data obtaining method shown in FIG. 7 is applied in combination with the method for obtaining, by the location management function network element, the positioning model from the network data analytics function network element shown in FIG. 4, after receiving the first message, the network data analytics function network element may perform S701 to request the training data from the first network element.

Optionally, in this scenario, the training data requested by the network data analytics function network element from the first network element may be determined based on the first message. For example, if the first message includes the model input requirement information indicating a type of training data that is input into the positioning model, the network data analytics function network element may send, to the first network element based on an indication of the model input requirement information, event identifier information indicating same training data.

Further, in this scenario, after receiving the training data from the first network element, the network data analytics function network element may train the positioning model based on the obtained training data, to obtain the first positioning model. In other words, the method for obtaining the training data by the network data analytics function network element may further include S703: The network data analytics function network element trains the first positioning model based on the training data.

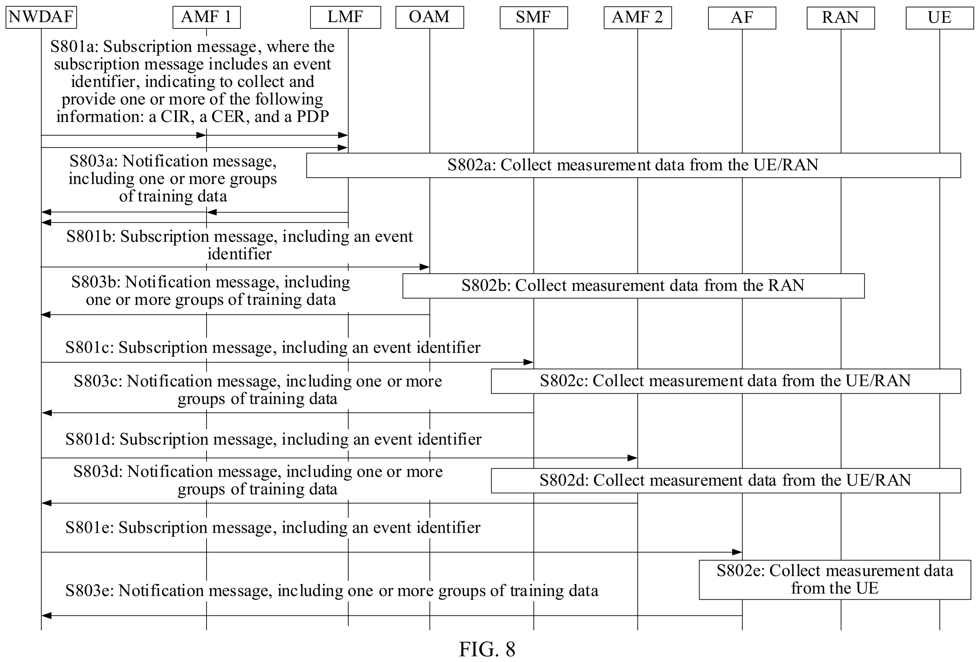

It is assumed that a method for obtaining the training data by the network data analytics function network element from the first network element is applied to a 5G system. In this case, the location management function network element is an LMF network element, the network data analytics function network element is an NWDAF network element, the network management network element is an OAM network element, the application function network element is an AF network element, the session management network element is an SMF network element, the access and mobility management function network element is an AMF network element, the access network device is a RAN, and the terminal device is UE. In this scenario, an example procedure in which the NWDAF network element obtains the training data from the first network element may be shown in FIG. 8, and includes the following steps.

S801a: The NWDAF network element sends a subscription message to the LMF network element, where the subscription message includes a specific event identifier (Event ID), indicating the LMF network element to collect and provide one or more of the following information: a CIR, a CER, and a PDP.

Optionally, the NWDAF network element may send the subscription message via an AMF network element 1.

S802a: The LMF network element collects corresponding measurement data from the UE/RAN as training data.

S803a: The LMF network element sends a notification message to the NWDAF network element, where the notification message includes one or more groups of training data.

Optionally, the LMF network element may send the notification message via the AMF 1 network element.

S801b: The NWDAF network element sends a subscription message to the OAM network element, where the subscription message includes a specific event identifier, indicating the OAM network element to collect and provide one or more of the following information: a CIR, a CER, and a PDP. S802b: The OAM network element collects corresponding measurement data from the RAN as training data.

S803b: The OAM network element sends a notification message to the NWDAF network element, where the notification message includes one or more groups of training data.

S801c: The NWDAF network element sends a subscription message to the SMF network element, where the subscription message includes a specific event identifier, indicating the SMF network element to collect and provide one or more of the following information: a CIR, a CER, and a PDP. S802c: The SMF network element collects corresponding measurement data from the UE/RAN as training data.

S803c: The SMF network element sends a notification message to the NWDAF network element, where the notification message includes one or more groups of training data.

S801d: The NWDAF network element sends a subscription message to the AMF network element, where the subscription message includes a specific event identifier, indicating an AMF network element 2 to collect and provide one or more of the following information: a CIR, a CER, and a PDP.

Optionally, the AMF network element 1 and the AMF network element 2 may be a same network element, or may be different network elements.

S802d: The AMF network element 2 collects corresponding measurement data from the UE/RAN as training data.

S803d: The AMF network element 2 sends a notification message to the NWDAF network element, where the notification message includes one or more groups of training data.

S801e: The NWDAF network element sends a subscription message to the AF network element, where the subscription message includes a specific event identifier, indicating the AF network element to collect and provide one or more of the following information: a CIR, a CER, and a PDP. S802e: The AF network element collects corresponding measurement data from the UE as training data.

S803e: The AF network element sends a notification message to the NWDAF network element, where the notification message includes one or more groups of training data.

For specific implementations of S801a to S803a, S801b to S803b, S801c to S803c, S801d to S803d, and S801e to S803e, refer to the foregoing descriptions of S701 and S702. Details are not described herein again.

It should be noted that a time sequence of S801a to S803a, S801b to S803b, S801c to S803c, S801d to S803d, and S801e to S803e is not limited in this embodiment of this application. For example, S801a and S802a may occur at the same time, or may not occur at the same time. The procedure shown in FIG. 8 is merely for showing interaction between different network elements, and does not constitute a limitation on a time sequence of the steps.

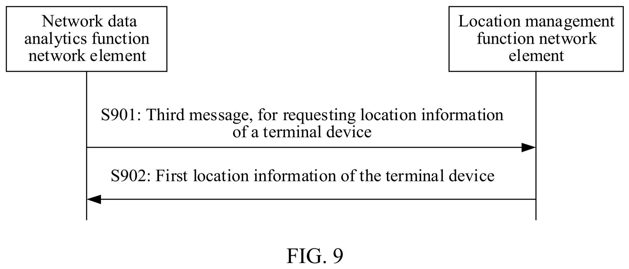

Refer to FIG. 9. Another training data obtaining method provided in an embodiment of this application includes steps S901 and S902.

S901: A network data analytics function network element sends a third message to a location management function network element, and correspondingly, the location management function network element receives the third message. The third message is for requesting location information of a terminal device.

Optionally, the third message may include area information, and indicates to obtain location information of the terminal device in a specific area. Optionally, if the training data obtaining method shown in FIG. 9 is applied in combination with the model obtaining method shown in FIG. 4, an area corresponding to the area information included in the third message may be an applicable area of a to-be-trained positioning model of the network data analytics function network element. Optionally, the third message may include first indication information, the first indication information indicates a first capability of the terminal device, the first capability is a capability of the terminal device to provide first location information of the terminal device, and the third message is for requesting first location information of the terminal device that has the first capability.

In other words, the terminal device having the first capability may provide the first location information of the terminal device.

The first location information is location information that has a smaller error with real location information of the terminal device. For example, in a conventional technology, an error between the location information of the terminal device obtained by the network data analytics function from an access and mobility management function network element or a third-party application function network element and the real location information of the terminal device is usually a meter level or a submeter level, and an error between the first location information provided by the terminal device having the first capability and the real location information of the terminal device may be a centimeter level or a millimeter level.

Optionally, the terminal device having the first capability may be a terminal device that does not move frequently.

Optionally, the first location information of the terminal device having the first capability may be preconfigured in the terminal device. For example, the location information of the terminal device, that is, the first location information, is obtained by using a professional measurement method (for example, by using a high-accuracy satellite positioning module built in the terminal device), and is configured in the terminal device.

For example, the first indication information may be Indicator information in the third message. S902: The location management function network element sends the first location information of the terminal device to the network data analytics function network element, and correspondingly, the network data analytics function network element receives the first location information of the terminal device.

Currently, a training data set of a model usually includes two parts: measurement data and a label corresponding to the measurement data. For a positioning model, the label corresponding to the measurement data is usually the location information of the terminal device. If the location information is closer to a real location of the terminal device, the label is more accurate, and accuracy of a trained positioning model is higher. Based on this embodiment of this application, a method for obtaining, by the network data analytics function network element, terminal location information that has a smaller error from a real terminal device location is provided, so that accuracy of a label of training data of a positioning model can be improved, thereby improving model accuracy of the positioning model.

Optionally, the location management function network element may send the first location information of the terminal device to the network data analytics function network element via the access and mobility management function network element, that is, the access and mobility management function network element forwards the first location information of the terminal device.

Optionally, in S902, after receiving the third message, the location management network element may determine the terminal device having the first capability, and obtain the first location information from the terminal device having the first capability, to send the first location information of the terminal device to the network data analytics function network element.

For the terminal device that is determined to have the first capability, in a possible implementation, the location management function network element may preconfigure a correspondence between identification information (for example, a UE ID) of the terminal device and whether the terminal device has the first capability. For example, it is assumed that a terminal device whose UE ID is 1 has the first capability, and another terminal device whose UE ID is 2 does not have the first capability. The terminal device having the first capability is identified by using identification information a, and the terminal device not having the first capability is identified by using identification information b. In the correspondence preconfigured by the location management function network element, the UE ID 1 may correspond to the identification information a, and the UE ID 2 may correspond to the identification information b.

In another possible implementation, the location management function network element may preconfigure a list of identification information of terminal devices having the first capability (or the identification information of the terminal devices having the first capability may be configured in the location management function network element in another form). This is not limited in this embodiment of this application. For example, it is assumed that a terminal device whose UE ID is 1 and a terminal device whose UE ID is 3 have the first capability, and another terminal device whose UE ID is 2 does not have the first capability. In this case, a list of identification information that is of terminal devices having the first capability and that is preconfigured by the location management function network element includes the UE ID 1 and the UE ID 3.

Optionally, in S902, the location management network element may preconfigure the first location information of the terminal device. After receiving the third message, the location management network element may send the preconfigured first location information of the terminal device to the network data analytics function network element.

Optionally, a data management network element may further provide the location management network element with identification information of the terminal device having the first capability. Before the network data analytics function network element sends the third message to the location management function network element, the training data obtaining method may further include the following steps:
S903: The network data analytics function network element sends a fourth message to the data management network element, where the fourth message includes the first indication information, the first indication information indicates the first capability of the terminal device, the first capability is a capability of the terminal device to provide the first location information of the terminal device, and the fourth message is for requesting identification information of the terminal device that has the first capability.

Optionally, the data management network element may preconfigure a correspondence between the identification information of the terminal device and whether the terminal device has the first capability, or the data management network element may preconfigure a list of identification information of terminal devices having the first capability. For details, refer to the foregoing descriptions of determining, by the location management function network element, the terminal device having the first capability. Details are not described herein again.

After receiving the fourth message, the data management network element may obtain, based on the fourth message, the identification information of the terminal device having the first capability. S904: The network data analytics function network element receives, from the data management network element, the identification information of the terminal device corresponding to the first indication information.

In S904, the data management network element sends the obtained identification information of the terminal device having the first capability to the network data analytics function network element.

Further, after obtaining the identification information of the terminal device having the first capability, the network data analytics function network element may include the identification information in the third message and send the third message to the location management function network element. After receiving the third message, the location management function network element may obtain the first location information of the terminal device from the corresponding terminal device based on the identification information of the terminal device in the third message, and send the first location information to the network data analytics function network element; or the location management network element may preconfigure a correspondence between the identification information (for example, a UE ID) of the terminal device and the first location information of the terminal device, and the location management network element may determine the first location information of the terminal device based on the identification information of the terminal device in the received third message and the locally preconfigured correspondence, and sends the first location information to the network data analytics function network element.

In addition, the data management network element may further provide the first location information of the terminal device for the network data analytics function network element. In this case, S901 is replaced with: The network data analytics function network element sends the third message to the data management network element, and correspondingly, the location management function network element receives the third message. The third message is for requesting location information of a terminal device. S902 is replaced with: The data management network element sends the first location information of the terminal device to the network data analytics function network element. For details, refer to the foregoing descriptions of S901 and S902. Details are not described herein again.

For example, the first location information of the terminal device may be a ground-truth UE coordinates parameter carried in a response message of the third message.

Optionally, after receiving the third message or the fourth message, the data management network element may further send, to the network data analytics function network element, information about a validity time period corresponding to the first location information of the terminal device. Within the validity time period, the first location information of the terminal device may be considered reliable. If the validity time period is exceeded, the first location information of the terminal device may no longer be reliable. Optionally, the network data analytics function network element may discard the first location information of the terminal device that exceeds the corresponding validity time period.

For example, the information about the validity time period corresponding to the first location information of the terminal device may be a Time period parameter carried in a response message of the third message or the fourth message.

Optionally, if the training data obtaining method shown in FIG. 9 is applied in combination with the model obtaining method shown in FIG. 4, after receiving the first message, the network data analytics function network element may perform S901 to obtain the first location information of the terminal device.

Further, in this scenario, after receiving the first location information of the terminal device, the network data analytics function network element may train the positioning model based on the obtained first location information, to obtain a first positioning model. In other words, the method for obtaining the training data by the network data analytics function network element may further include S905: The network data analytics function network element trains the first positioning model based on the first location information of the terminal device.

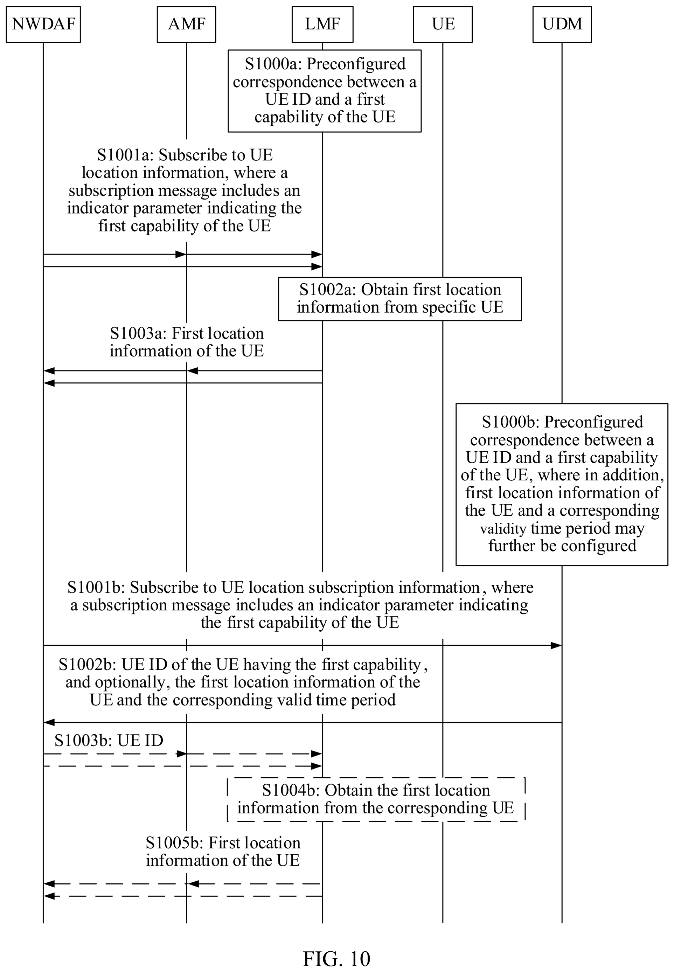

Optionally, the training data obtaining method shown in FIG. 7 or the training data obtaining method shown in FIG. 9 may be applied in combination with the model obtaining method shown in FIG. 4. If the network data analytics function network element obtains the training data/the first location information of the terminal device from the location management function network element, the location management network element may be a location management network element that sends the first message, or may be another location management network element. It is assumed that the method for obtaining the first location information of the terminal device by the network data analytics function network element from the location management function network element is applied to a 5G system. In this case, the location management function network element is an LMF network element, the network data analytics function network element is an NWDAF network element, the access and mobility management function network element is an AMF network element, the terminal device is UE, and the data management network element is a UDM network element. In this scenario, an example procedure in which the NWDAF network element obtains first location information of the UE from the LMF network element may be shown in FIG. 10, and includes the following steps.

S1000a: A correspondence between a UE ID and a first capability (UE capability) of the UE is preconfigured on the LMF.

S1001a: The NWDAF network element subscribes to UE location information from the LMF network element, where a subscription message includes an indicator parameter indicating the first capability of the UE, and the subscription message indicates to collect first location information (ground-truth UE coordinates) of the UE having the first capability.

Optionally, the NWDAF network element may subscribe to the UE location information from the LMF network element via the AMF network element.

S1002a: The LMF network element obtains first location information of specific UE (UE having the first capability) from the specific UE based on the indicator parameter, or the LMF network element preconfigures the first location information of the specific UE.

S1003a: The LMF network element sends the first location information of the UE to the NWDAF network element.

Optionally, the LMF network element may send the first location information of the UE to the NWDAF network element via the AMF network element.

Optionally, the first location information of the UE and a corresponding UE ID may be sent to the NWDAF network element together.

Alternatively, as shown in FIG. 10, the NWDAF network element may obtain the first location information of the UE based on the following example procedure:
S1000b: A correspondence between a UE ID and a first capability of the UE is preconfigured on the UDM network element. In addition, the UDM network element may further configure first location information (ground-truth UE coordinates) of the UE and a validity time period (Time period) corresponding to the first location information of the UE.

S1001b: The NWDAF network element subscribes to UE location subscription information from the UDM network element, where a subscription message includes an indicator parameter indicating the first capability of the UE. The subscription message indicates to collect a UE ID of the UE having the first capability.

S1002b: The UDM network element feeds back, based on the subscription message, the UE ID of the UE having the first capability.

Optionally, if the UDM network element stores the first location information of the UE and the corresponding validity time period, the UDM network element may feed back the information to the NWDAF network element.

S1003b: Optionally, if the UDM network element feeds back the UE ID to the NWDAF network element, but does not feed back the first location information of the UE, the NWDAF network element may send the UE ID to the LMF network element, to request the LMF network element to provide the first location information of the UE corresponding to the UE ID.

Optionally, the NWDAF network element may send the UE ID to the LMF network element via the AMF network element.

S1004b: Optionally, the LMF network element obtains the first location information from the corresponding UE based on the UE ID, or obtains the first location information of the UE based on a local configuration.

S1005b: The LMF network element sends the first location information of the UE to the NWDAF network element.

Optionally, the LMF network element may send the first location information of the UE to the NWDAF network element via the AMF network element.

Optionally, the first location information of the UE and a corresponding UE ID may be sent to the NWDAF network element together.

For specific implementations of S1000a to S1003a and S1000b to S1005b, refer to the foregoing descriptions of S701 and S702. Details are not described herein again.

The model obtaining method and the training data obtaining method provided in embodiments of this application are described in detail above with reference to FIG. 4 to FIG. 10.

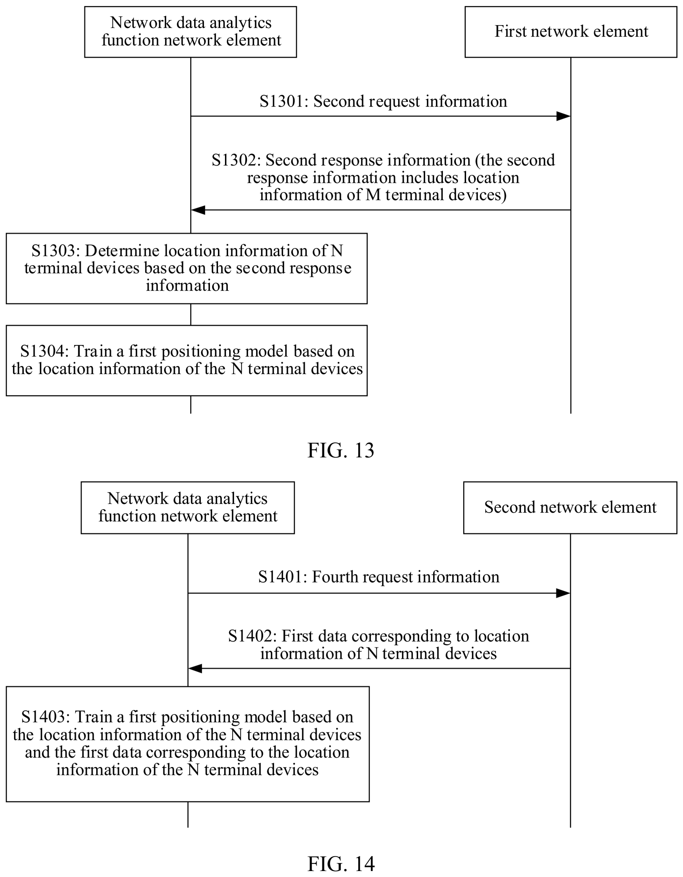

Optionally, this application further provides a training data obtaining method. In the method, a network data analytics function network element may obtain location information (or M pieces of location information) of M terminal devices. Specific steps may be shown in FIG. 13.

S1301: The network data analytics function network element sends a second request message to a first network element, and correspondingly, the first network element receives the second request message from the network data analytics function network element.

The second request message is for requesting location information of a terminal device.

Optionally, the first network element may be a location management function network element (LMF network element), an operations, administration and management function network element (OAM network element), a gateway mobile positioning center network element (GMLC network element), a session management function network element (SMF network element), an access and mobility management function network element (AMF network element), or an application function network element (AF network element). This is not limited.

For a positioning model, a label of training data is usually location information of a terminal device. If the location information is closer to a real location of the terminal device, the label is more accurate, and accuracy of a trained positioning model is higher.

It may be understood that the location information of the terminal device may be one piece of location information, or may be a plurality of pieces of location information, which, for ease of understanding, are collectively referred to as the location information of the terminal device in this application.

Optionally, the network data analytics function network element may send identification information of a PRU of the terminal device to the first network element, and the first network element may determine, based on the identification information of the PRU of the terminal device, that the location information of the M terminal devices is location information corresponding to identification information of PRUs of the M terminal devices. Alternatively, the network data analytics function network element may send identification information of the terminal device to the first network element, and the first network element may determine, based on the identification information of the terminal device, that the location information of the M terminal devices is location information corresponding to identification information of the M terminal devices. Identification information of the PRU of the terminal device is prestored, or the identification information of the terminal device is prestored.

For example, the identification information of the PRU of the terminal device is used as an example. The identification information of the PRU of the terminal device may be a unique identification code of the PRU of the terminal device, may be an internet protocol (internet protocol, IP) address of the PRU of the terminal device, or may be a media access control (media access control, MAC) address of the PRU of the terminal device.

In a possible embodiment, for example, the identification information of the PRU of the terminal device indicates an identifier 1, an identifier 2, ..., and an identifier 10. The first network element may send, to the network data analytics function network element, location information corresponding to the identifier 1, location information corresponding to the identifier 2, ..., and location information corresponding to the identifier 10.

It may be understood that the identification information of the PRU of the terminal device (or the identification information of the terminal device) may be separately sent, or the second request message may include the identification information of the PRU of the terminal device (or the identification information of the terminal device), that is, the identification information of the PRU of the terminal device (or the identification information of the terminal device) is carried in the second request message.

Based on the descriptions of the identification information of the PRU of the terminal device (or the identification information of the terminal device), the network data analytics function network element can request the location information corresponding to the identification information of the terminal device (or the PRU of the terminal device), so that a label of training data better meets a positioning model training requirement, to provide a feasible solution for the network data analytics function network element to request the location information of the terminal device.

It may be understood that the PRU of the terminal device may be a built-in functional module of the terminal device, and a location of the PRU may be preconfigured, or may be obtained through calculation by using a specific positioning method (for example, satellite positioning); or the PRU may be a terminal device (that is, the PRU may be an independent terminal device), and location information of the PRU may be preconfigured, or may be obtained through calculation by using a specific positioning method (for example, satellite positioning).

It may be understood that positioning accuracy of the location information of the PRU of the terminal device (the positioning accuracy may be understood as an error between the location information of the PRU of the terminal device and real location information) is high, that is, the error between the location information of the PRU of the terminal device and the real location is small. For example, the positioning accuracy of the location information of the PRU may reach a centimeter level.

It may be understood that the location information of the terminal device may be obtained by the first network element from the PRU of the terminal device (that is, the location information of the PRU of the terminal device is preconfigured); or the location information of the terminal device may be obtained by the first network element by collecting measurement data and performing calculation on the measurement data according to different positioning methods.

Specifically, the measurement data may be time of arrival, an angle of arrival, and a time difference of arrival of a signal sent by the terminal device to the first network element, an angle of departure and time of departure of the signal sent by the terminal device, or the like.

Optionally, the network data analytics function network element may send second indication information to the first network element. When the PRU is not an independent terminal device, the first network element may determine, based on the second indication information, that the location information of the M terminal devices is location information of one or more terminal devices in which a PRU exists and/or location information of one or more terminal devices in which no PRU exists (in other words, the M terminal devices are one or more terminal devices in which a PRU exists and/or one or more terminal devices in which no PRU exists). When the PRU is an independent terminal device, the first network element may determine, based on the second indication information, that the location information of the M terminal devices is location information of one or more PRUs and/or location information of one or more non-PRU terminal devices (in other words, the M terminal devices are one or more PRUs and/or one or more non-PRU terminal devices).

Alternatively, when the PRU is not an independent terminal device, the first network element may determine, based on the second indication information, that the M pieces of location information are location information corresponding to one or more terminal devices in which a PRU exists and/or location information corresponding to one or more terminal devices in which no PRU exists (that is, one terminal device may correspond to one or more pieces of location information). When the PRU is an independent terminal device, the M pieces of location information are location information corresponding to one or more PRUs and/or location information corresponding to one or more non-PRU terminal devices (that is, one terminal device may correspond to one or more pieces of location information).

The second indication information indicates to obtain location information of a terminal device that is for model training.

It may be understood that the second indication information may be separately sent, or the second request message may further include the second indication information (that is, the second indication information is carried in the second request message).

Based on the descriptions of the second indication information, the network data analytics function network element may request location information of more terminal devices, so that a data training set can be extended, thereby improving model accuracy of a positioning model.

Optionally, the network data analytics function network element may send third indication information to the first network element. Correspondingly, when the PRU is not an independent terminal device, the first network element may determine, based on the third indication information, that the location information of the M terminal devices is location information of the M terminal devices in which a PRU exists (in other words, the M terminal devices are M terminal devices in which a PRU exists). When the PRU is an independent terminal device, the first network element may determine, based on the third indication information, that the location information of the M terminal devices is location information of the M PRUs (in other words, the M terminal devices are M PRUs).

Alternatively, when the PRU is not an independent terminal device, the first network element may determine, based on the third indication information, that the M pieces of location information are location information corresponding to a terminal device in which a PRU exists (that is, a PRU of one terminal device may correspond to one or more pieces of location information); or when the PRU is an independent terminal device, the first network element may determine, based on the third indication information, that the M pieces of location information are location information corresponding to a PRU (that is, one PRU may correspond to one or more pieces of location information).

The third indication information indicates to obtain the location information of the PRU of the terminal device. Alternatively, the third indication information indicates to obtain the location information of the PRU.

It may be understood that the third indication information may be separately sent, or the second request message may further include the third indication information (that is, the third indication information is carried in the second request message).

Based on the descriptions of the third indication information, the network data analytics function network element can request the location information of the PRU of the terminal device (or request the location information of the PRU). Because positioning accuracy of the location information of the PRU of the terminal device is high, accuracy of a label of training data of a positioning model can be improved, thereby improving model accuracy of the positioning model.

It may be understood that the network data analytics function network element may request the location information of the M terminal devices (to be specific, a type of the terminal device is not limited, and the terminal device may be a terminal device in which a PRU exists, or may be a terminal device in which no PRU exists), may request location information of a PRU of the M terminal devices (to be specific, the terminal device is limited to a terminal device in which a PRU exists), may request the location information of the terminal device corresponding to the identification information based on the identification information, or may request the foregoing three types of information. This is not limited.

Optionally, the network data analytics function network element may send quantity threshold information to the first network element.

The quantity threshold information indicates a quantity threshold of location information of a terminal device that is expected to be obtained. Alternatively, the second request message indicates a quantity threshold of terminal devices that are expected to be obtained. Alternatively, the second request message indicates a quantity threshold of location information that is expected to be obtained.

For example, the quantity threshold information may indicate a quantity range, the quantity threshold information may indicate a lower quantity limit, or the quantity threshold information may indicate an upper quantity limit.

For example, the quantity threshold information indicates a quantity range. When the quantity threshold information indicates [100, 120], it may indicate that a quantity of pieces of location information of the terminal device that the network data analytics function network element expects to obtain is from 100 to 120.

For another example, the quantity threshold information indicates a lower quantity limit. When the quantity threshold information indicates 100, it may indicate that a quantity of pieces of location information of a terminal device that the network data analytics function network element expects to obtain is greater than or equal to 100.

For another example, the quantity threshold information indicates an upper quantity limit. When the quantity threshold information indicates 200, it may indicate that a quantity of pieces of location information of a terminal device that the network data analytics function network element expects to obtain is less than or equal to 200.

It may be understood that the quantity threshold information may be separately sent, or the second request message may further include the quantity threshold information (that is, the quantity threshold information is carried in the second request message).

It may be understood that the network data analytics function network element may limit a quantity of pieces of location information of the terminal device that are expected to be obtained. On one hand, it can be ensured as much as possible that a quantity of pieces of obtained location information of the terminal device meets a positioning model training requirement, thereby improving model accuracy of a positioning model. On the other hand, it can be ensured as much as possible that a quantity of pieces of obtained location information of the terminal device is limited within a specific range, thereby reducing transmission overheads and improving training efficiency of a positioning model.

S1302: The first network element sends a second response message to the network data analytics function network element, and correspondingly, the network data analytics function network element receives the second response message from the first network element.

The second response message includes the location information of the M terminal devices.

M is a positive integer.

It may be understood that one terminal device may correspond to one or more pieces of location information. In this case, the second response message may also indicate M pieces of location information. For ease of understanding, unless otherwise specified, the second response information in this application indicates the location information of the M terminal devices. Specifically, the first network element may determine the location information of the M terminal devices based on a requirement of the network data analytics function network element; or the first network element determines location information of any M terminal devices.

Based on a fact that the first network element determines the location information of the M terminal devices based on the requirement of the network data analytics function network element, this application provides two possible designs.

In a first possible design, the first network element may determine the location information of the M terminal devices based on fourth indication information.

The fourth indication information indicates quality requirement information.

Specifically, the network data analytics function network element sends the fourth indication information to the first network element. Correspondingly, the first network element receives the fourth indication information from the network data analytics function network element. Further, the first network element determines the location information of the M terminal devices based on the fourth indication information.

Quality of the location information of the M terminal devices meets a quality requirement. Quality of location information of a terminal device may be understood as an error between the location information of the terminal device and a real location of the terminal device (that is, positioning accuracy of the location information of the terminal device).

It may be understood that the positioning accuracy may be determined according to different positioning methods (for example, positioning accuracy of location information obtained through calculation by using a conventional positioning method is low, and positioning accuracy of location information obtained through calculation by using an artificial intelligence positioning method is high). Alternatively, the positioning accuracy may be determined based on different measurement data (for example, positioning accuracy of location information obtained through calculation by using an angle of departure and an angle of arrival of a signal is higher than positioning accuracy of location information obtained through calculation by using only an angle of arrival of a signal). Alternatively, the positioning accuracy may be determined based on an error between the obtained real location of the terminal device and the location information obtained through calculation based on the measurement data.

The quality requirement information may indicate a quality threshold (which may be understood as a positioning accuracy threshold), may indicate a threshold of a degree (for example, high/medium/low) of positioning accuracy, or may indicate a threshold of a score (for example, 80/100) of positioning accuracy. This is not limited.

In a possible embodiment, for example, the quality requirement information indicates the quality threshold and the quality threshold is a value (for example, a first value). Assuming that an error between location information of a terminal device 1 and a real location of the terminal device 1 is less than the first value, and an error between location information of a terminal device 2 and a real location of the terminal device 2 is greater than the first value, the first network element may send the location information of the terminal device 1 to the network data analytics function network element.

In another possible embodiment, for example, the quality requirement information indicates a quality threshold, and the quality threshold is a range (for example, from a first value to a second value). Assuming that an error between location information of a terminal device 1 and a real location of the terminal device 1 is greater than the first value and less than the second value, and an error between location information of a terminal device 2 and a real location of the terminal device 2 is greater than the second value, the first network element may send the location information of the terminal device 1 to the network data analytics function network element.

It may be understood that the first network element may determine location information of a group of terminal devices (that is, the location information of the M terminal devices) in the foregoing two manners, and then send the location information of the group of terminal devices to the network data analytics function network element.

It may be understood that the fourth indication information may be separately transmitted; or the second request message may further include the fourth indication information (that is, the fourth indication information is carried in the second request message).

Based on the first possible design, the first network element may determine the location information of the M terminal devices, to ensure, as much as possible, that positioning accuracy of location information of each of the M terminal devices is high, and ensure, as much as possible, that accuracy of a label of training data of a positioning model is high, thereby improving model accuracy of the positioning model.

In a second possible design, the first network element may determine the location information of the M terminal devices based on fifth indication information.

The fifth indication information indicates a threshold of a ratio of a quantity of terminal devices in which a PRU exists in the location information of the terminal device that is expected to be obtained to a quantity of all obtained terminal devices. Alternatively, the fifth indication information indicates a threshold of a ratio of a quantity of terminal devices in which a PRU exists in the location information of the terminal device that is expected to be obtained to a quantity of all terminal devices fed back to the network data analytics function network element. Alternatively, the fifth indication information indicates a threshold of a ratio of a quantity of pieces of location information corresponding to a terminal device in which a PRU exists in the location information that is expected to be obtained to a quantity of pieces of all obtained location information. Alternatively, the fifth indication information indicates a threshold of a ratio of a quantity of pieces of location information corresponding to a terminal device in which a PRU exists in the location information that is expected to be obtained to a quantity of pieces of all location information fed back to the network data analytics function network element.

Specifically, the network data analytics function network element sends the fifth indication information to the first network element. Correspondingly, the first network element receives the fifth indication information from the network data analytics function network element. Further, the first network element determines the location information of the M terminal devices based on the fifth indication information.

A ratio of a quantity of terminal devices that are in the M terminal devices and in which a PRU exists to M meets the ratio threshold. Alternatively, it is understood that a ratio of a quantity of pieces of location information that corresponds to a terminal device in which a PRU exists in the M pieces of location information to M meets the ratio threshold.

For example, the ratio threshold may be a value, or the ratio threshold may be a range (for example, the ratio threshold may be 0.9 to 0.95).

In a possible embodiment, an example in which the ratio threshold is 0.95 and M is 100 is used. In this case, a quantity of terminal devices in which a PRU exists needs to be greater than or equal to 95, and the first network element may send location information of a minimum of 95 terminal devices in which a PRU exists and location information of a maximum of five terminal devices to the network data analytics function network element. Alternatively, a quantity of pieces of location information corresponding to a terminal device in which a PRU exists needs to be greater than or equal to 95, and the first network element may send a minimum of 95 pieces of second location information (the second location information is location information corresponding to a PRU of a terminal device) and a maximum of five pieces of third location information (the third location information is location information corresponding to a non-PRU terminal device) to the network data analytics function network element.

It may be understood that the fifth indication information may be separately transmitted; or the second request message may further include the fifth indication information (that is, the fifth indication information is carried in the second request message).

Based on the second possible design, the first network element may enable a quantity of terminal devices that are in the M terminal devices and in which a PRU exists to meet a required requirement, to ensure, as much as possible, high accuracy of a label of training data of a positioning model, thereby improving model accuracy of the positioning model.

It may be understood that, with reference to the foregoing two possible designs, the first network element can determine the location information of the M terminal devices, that is, the location information of the M terminal devices can meet the quality threshold, and a ratio of a quantity of terminal devices that are in the M terminal devices and in which a PRU exists to M meets the ratio threshold.

Optionally, the location information of the terminal device may further indicate identification information of the terminal device; or first response information may include identification information of each terminal device.

For example, the location information of the terminal device may indicate the identification information of the terminal device and location information corresponding to the identification information of the terminal device.

It may be understood that the location information of the PRU of the terminal device may be location information preconfigured on the first network element, and the first network element may determine the location information of the PRU of the terminal device based on the identification information of the PRU of the terminal device.

Optionally, the location information of each terminal device may further include time information; or the second response message may include time information corresponding to the location information of each terminal device.

The time information indicates time for obtaining the location information.

It may be understood that, when the first network element generates the location information based on the collected measurement data, the time information may be time at which the location information is generated and that corresponds to the location information; or when the first network element receives the location information from the terminal device or the network device, the time information may be time at which the location information is received and that corresponds to the location information.

For example, location information of a terminal device may include location information 1 and a time period (for example, a moment 1 to a moment 2) that is for generating the location information 1 and that corresponds to the location information 1, and location information 2 and a time period (for example, the moment 2 to a moment 3) that is for generating the location information 2 and that corresponds to the location information 2. The network data analytics function network element may determine corresponding location information based on the time period.

For another example, location information of a terminal device may include location information 1 and a timestamp (for example, a moment 1) that is for generating the location information 1 and that corresponds to the location information 1, and location information 2 and a timestamp (for example, a moment 2) that is for generating the location information 2 and that corresponds to the location information 2. The network data analytics function network element may determine corresponding location information based on the timestamp.

It may be understood that the time corresponding to the location information may be time at which the location information is generated (for example, time at which the location information is measured and calculated by using a radio access technology-based positioning method), or a validity time period of the location information (that is, the location information is valid in the time period, and the location information changes in another time period outside the time period, or the location information is no longer accurate enough).

Based on S1302, in a possible embodiment, location information of a terminal device may include identification information of the terminal device, one or more pieces of location information of the terminal device, and time information corresponding to each piece of location information; or the first response information may include identification information of each terminal device, one or more pieces of location information of each terminal device, and time information corresponding to each piece of location information.

S1303: The network data analytics function network element determines location information of N terminal devices based on the second response message.

N is a positive integer less than or equal to M.

When the network data analytics function network element sends the fourth indication information and/or the fifth indication information to the first network element, the network data analytics function network element may directly determine the location information of the M terminal devices (that is, N is equal to M); or regardless of whether the network data analytics function network element sends the fourth indication information and/or the fifth indication information to the first network element, the network data analytics function network element may determine the location information of the N terminal devices (that is, N is less than M) from the location information of the M terminal devices.

It may be understood that, the network data analytics function network element may directly obtain the location information of the M terminal devices from the first network element, so that workload of the network data analytics function network element can be reduced; or the location information of the N terminal devices is determined from the location information of the M terminal devices, so that accuracy of a label of training data of a positioning model can be improved, thereby improving model accuracy of the positioning model.

Based on a fact that the network data analytics function network element determines the location information of the N terminal devices based on the second response message, this application provides three possible designs.

In a first possible design, the network data analytics function network element determines the location information of the N terminal devices based on quality corresponding to the location information of the M terminal devices.

This application provides two possible implementations for determining, by the network data analytics function network element, the quality corresponding to the location information of the M terminal devices.

In a possible implementation, the network data analytics function network element may determine, based on quality information corresponding to the location information of the M terminal devices from the first network element, the quality corresponding to the location information of the M terminal devices.

The quality information indicates quality of location information of a terminal device.

Quality of location information of a terminal device may be understood as an error between the location information of the terminal device and a real location of the terminal device (that is, positioning accuracy of the location information of the terminal device).

This application provides three possible embodiments based on a representation form of the quality information.

In a first possible embodiment, the quality information may indicate positioning accuracy (that is, a specific value) of the location information. The network data analytics function network element may determine positioning accuracy of location information of each terminal device, and may further determine, from the location information of the M terminal devices, location information of the N terminal devices with high positioning accuracy.

For example, the network data analytics function network element receives location information of 30 terminal devices (that is, M=30), positioning accuracy of location information of a terminal device 1 to a terminal device 10 is 0.05 m (that is, an error between location information of a terminal device and a real location of the terminal device is 0.05 m), positioning accuracy of location information of a terminal device 11 to a terminal device 20 is 0.3 m (that is, an error between location information of a terminal device and a real location of a terminal device is 0.3 m), and positioning accuracy of location information of a terminal device 21 to a terminal device 30 is 0.5 m (that is, an error between location information of a terminal device and a real location of the terminal device is 0.5 m). When the network data analytics function network element requires the positioning accuracy of the location information to be higher than 0.1 m (that is, the error between the location information of the terminal device and the real location of the terminal device is less than 0.1 m), the network data analytics function network element may determine that the location information of the terminal device 1 to the terminal device 10 is a label of training data; when the network data analytics function network element requires the positioning accuracy of the location information to be higher than 0.4 m (that is, the error between the location information of the terminal device and the real location of the terminal device is less than 0.4 m), the network data analytics function network element may determine that the location information of the terminal device 1 to the terminal device 20 is a label of training data.

In a second possible embodiment, the quality information may indicate a degree of the positioning accuracy. For example, when the positioning accuracy is high (for example, an error between location information of a terminal device and a real location of the terminal device is less than 0.1 m), "high" may be used for indication; when the positioning accuracy is low (for example, an error between location information of a terminal device and a real location of the terminal device is greater than 1 m), "low" may be used for indication; when the positioning accuracy is moderate (for example, an error between location information of a terminal device and a real location of the terminal device is greater than 0.1 m and less than 1 m), "medium" may be used for indication. For example, the network data analytics function network element receives location information of 30 terminal devices (that is, M=30), degrees of positioning accuracy of location information of a terminal device 1 to a terminal device 10 are "high", degrees of positioning accuracy of location information of a terminal device 11 to a terminal device 20 are "medium", and degrees of positioning accuracy of location information of a terminal device 21 to a terminal device 30 are "low". When the network data analytics function network element requires the degree of the positioning accuracy of the location information to be "high", the network data analytics function network element may determine that the location information of the terminal device 1 to the terminal device 10 is a label of training data; when the network data analytics function network element requires the degree of the positioning accuracy of the location information to be "medium" or "high", the network data analytics function network element may determine that the location information of the terminal device 1 to the terminal device 20 is a label of training data.

In a third possible embodiment, the quality information may indicate a score of the positioning accuracy. For example, when the positioning accuracy of the location information of the terminal device is high, the score of the positioning accuracy is high; or when the positioning accuracy of the terminal device is low, the score of the positioning accuracy is low.

For example, the network data analytics function network element receives location information of 30 terminal devices (that is, M=30), scores of positioning accuracy of location information of a terminal device 1 to a terminal device 10 are "100", scores of positioning accuracy of location information of a terminal device 11 to a terminal device 20 are "90", and scores of positioning accuracy of location information of a terminal device 21 to a terminal device 30 are "80". When the network data analytics function network element requires the score of the positioning accuracy of the location information to be greater than "95", the network data analytics function network element may determine that the location information of the terminal device 1 to the terminal device 10 is a label of training data; when the network data analytics function network element requires the score of the positioning accuracy of the location information to be greater than or equal to "90", the network data analytics function network element may determine that the location information of the terminal device 1 to the terminal device 20 is a label of training data.

Optionally, the first network element may actively send the quality information to the network data analytics function network element, or may send the quality information at a request of the network data analytics function network element. This is not limited.

If the first network element sends the quality information at the request of the network data analytics function network element, specifically, the network data analytics function network element may send third request information to the first network element. Correspondingly, the first network element may receive the third request information from the network data analytics function network element. Further, the first network element may send, to the network data analytics function network element based on the third request information, the quality information corresponding to the location information of the N terminal devices.

The third request information is for requesting quality information corresponding to the location information of the terminal device.

It may be understood that the third request information may be separately transmitted; or the second request message may further include the third request information (that is, the third request information is carried in the second request message).

It may be understood that, different from a case in which the first network element actively sends the quality information to the network data analytics function network element, the network data analytics function network element may request the first network element to send the quality information. This can avoid, as much as possible, a case in which the first network element sends the quality information when the network data analytics function network element does not need the quality information, thereby improving efficiency of information exchange between the network data analytics function network element and the first network element.

In another possible implementation, the network data analytics function network element may determine, based on the positioning accuracy of the location information of the terminal device, the quality corresponding to the location information of the M terminal devices.

The network data analytics function network element may determine the positioning accuracy of the location information of the terminal device. When the positioning accuracy is higher than a quality threshold (or a positioning error is less than a quality threshold) or is within a range of the quality threshold, the location information of the terminal device may be used as a label of training data.

Based on the first possible design, the network data analytics function network element may determine location information of a terminal device with high positioning accuracy, so that accuracy of a label of training data of a positioning model can be improved, thereby improving model accuracy of the positioning model.

In a second possible design, the network data analytics function network element may determine the location information of the N terminal devices based on sixth indication information.

The sixth indication information indicates whether a PRU exists in each of the M terminal devices, or the sixth indication information indicates whether each of the M terminal devices is a PRU. For example, the sixth indication information is a bitmap, and M is 6. When the bitmap is 100010, it may indicate that a 1^{st} terminal device is a PRU, and a 5^{th} terminal device is a PRU.

In another example, M is 6, and the sixth indication information is six bits. Each bit may correspond to one terminal device. When a bit value is 100010, it may indicate that a 1^{st} terminal device is a PRU, and a 5^{th} terminal device is a PRU.

Specifically, the first network element sends the sixth indication information to the network data analytics function network element. Correspondingly, the network data analytics function network element receives the sixth indication information from the first network element. Further, the network data analytics function network element determines the location information of the N terminal devices from the location information of the M terminal devices based on the sixth indication information.

The location information of the N terminal devices includes location information of a terminal device in which a PRU exists.

For example, the sixth indication information indicates that a PRU exists in a terminal device 1 to a terminal device 10, and no PRU exists in a terminal device 11 to a terminal device 20. When the network data analytics function network element requires that location information of a terminal device in which a PRU exists be used as a label of training data, the network data analytics function network element may determine that the location information of the terminal device 1 to the terminal device 10 is the label of the training data.

It may be understood that the sixth indication information may be separately transmitted, or the second response message may further include the sixth indication information (that is, the sixth indication information is carried in the second response message).

Optionally, the first network element may actively send the sixth indication information to the network data analytics function network element, or the first network element may send the sixth indication information at a request of the network data analytics function network element.

If the first network element sends the sixth indication information at the request of the network data analytics function network element, specifically, the network data analytics function network element may send fifth request information to the first network element. Correspondingly, the first network element may receive the fifth request information from the network data analytics function network element. Further, the first network element may send the sixth indication information to the network data analytics function network element based on the fifth request information.

The fifth request information is for requesting information about whether each terminal device has a PRU; or the fifth request information is for requesting information about whether each terminal device is a PRU.

It may be understood that the fifth request information may be separately transmitted; or the second request message may further include the fifth request information (that is, the fifth request information is carried in the second request message).

Based on the second possible design, the network data analytics function network element may determine as many terminal devices as possible in which PRUs exist. Because positioning accuracy of location information of a PRU of a terminal device is high, accuracy of a label of training data of a positioning model can be improved, thereby improving model accuracy of the positioning model.

In a third possible design, the network data analytics function network element may determine the location information of the N terminal devices based on seventh indication information.

The seventh indication information indicates a location generation method corresponding to location information of each of the M terminal devices.

Specifically, the first network element sends the seventh indication information to the network data analytics function network element. Correspondingly, the network data analytics function network element receives the seventh indication information from the first network element. Further, the network data analytics function network element determines the location information of the N terminal devices from the location information of the M terminal devices based on the seventh indication information.

The location generation method is one or more of the following: a radio access technology-based positioning method (for example, time of arrival (time of arrival, ToA), a time difference of arrival (time difference of arrival, TDoA), an angle of arrival (angle of arrival, AoA), and an angle of departure (angle of departure, AoD)), or an artificial intelligence positioning method (for example, an AI/ML model based on a convolutional neural network (convolutional neural network, CNN), where an input of the model is a CIR, and an output is a UE location (location)).

For example, location information of a terminal device 1 corresponds to the radio access technology-based positioning method, and location information of a terminal device 2 corresponds to the artificial intelligence positioning method. The network data analytics function network element may determine that positioning accuracy of the location information of the terminal device 1 is lower than positioning accuracy of the location information of the terminal device 2, and then select the location information of the terminal device 2 as the label of the training data.

It may be understood that the seventh indication information may be separately transmitted, or the second response message may further include the seventh indication information (that is, the seventh indication information is carried in the second response message).

Optionally, the first network element may actively send the seventh indication information to the network data analytics function network element, or the first network element may send the seventh indication information at a request of the network data analytics function network element. If the first network element sends the seventh indication information at the request of the network data analytics function network element, specifically, the network data analytics function network element may send sixth request information to the first network element. Correspondingly, the first network element may receive the sixth request information from the network data analytics function network element. Further, the first network element may send the seventh indication information to the network data analytics function network element based on the sixth request information.

The sixth request information is for requesting information about a location generation method corresponding to location information of each terminal device.

It may be understood that the sixth request information may be separately transmitted; or the second request message may further include the sixth request information (that is, the sixth request information is carried in the second request message).

Based on the third possible design, positioning accuracy of location information of terminal devices corresponding to different location generation methods is different, so that the network data analytics function network element can determine location information of a terminal device with high positioning accuracy based on a location generation method corresponding to location information of a terminal device, so that accuracy of a label of training data of a positioning model can be improved, thereby improving model accuracy of the positioning model.

It may be understood that the network data analytics function network element may jointly determine the location information of the N terminal devices based on the foregoing three possible designs or any two possible designs of the foregoing three possible designs. This application provides two possible embodiments.

In a possible embodiment, for example, the sixth indication information indicates that a PRU exists in a terminal device 1 to a terminal device 10 and no PRU exists in a terminal device 11 to a terminal device 20, and the seventh indication information indicates that a location generation method corresponding to location information of the terminal device 1 to the terminal device 15 is the artificial intelligence positioning method, and a location generation method corresponding to location information of the terminal device 16 to the terminal device 20 is the radio access technology-based positioning method. When the network data analytics function network element requires to use location information that is of a terminal device in which a PRU exists and that is generated by using the artificial intelligence positioning method as a label of training data, the network data analytics function network element may determine that the location information of the terminal device 1 to the terminal device 10 is the label of the training data.

In another possible embodiment, for example, the sixth indication information indicates that a PRU exists in a terminal device 1 to a terminal device 15 and no PRU exists in a terminal device 16 to a terminal device 20, a score of positioning accuracy of location information of the terminal device 1 to the terminal device 10 is 100, a score of positioning accuracy of location information of the terminal device 11 to the terminal device 15 is 90, and a score of positioning accuracy of location information of the terminal device 16 to the terminal device 20 is 80. When the network data analytics function network element requires to use, as a label of training data, location information that is generated by a terminal device in which a PRU exists and whose positioning accuracy score is greater than or equal to 90, the network data analytics function network element may determine that the location information of the terminal device 1 to the terminal device 15 is the label of the training data.

After receiving the location information of the M terminal devices, the network data analytics function network element may train the positioning model based on the location information of the N terminal devices, to obtain a first positioning model. In other words, the method for obtaining the training data by the network data analytics function network element may further include S1304: The network data analytics function network element trains the first positioning model based on the location information of the N terminal devices.

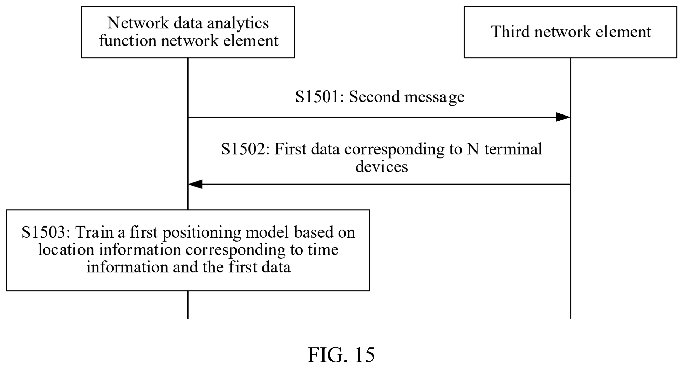

For training of the first positioning model, refer to the following FIG. 14 and FIG. 15. Details are not described herein.

Based on the training data obtaining method shown in FIG. 13, a method for requesting the location information of the terminal device by the network data analytics function network element is provided. The network data analytics function network element may obtain location information of a large quantity of terminal devices, so that a data training set can be extended, thereby improving model accuracy of a positioning model.

It may be understood that a training data set of the first positioning model may include two parts: the training data and the label (that is, the location information of the terminal device) of the training data.

The label of the training data may be determined according to the method shown in S1301 to S1303. Details are not described herein again.

In a possible implementation, specific steps of training the first positioning model by the network data analytics function may be shown in FIG. 14.

S1401: The network data analytics function network element sends fourth request information to a second network element, and correspondingly, the second network element receives the fourth request information from the network data analytics function network element.

The fourth request information is for requesting the first data corresponding to the location information of the N terminal devices.

The first data is for training the first positioning model.

For example, the first data may be one or more of the following: a CIR, a CER, or a PDP.

Optionally, the second network element may be a location management function network element (LMF network element), an operations, administration and management function network element (OAM network element), a gateway mobile positioning center network element (GMLC network element), a session management function network element (SMF network element), an access and mobility management function network element (AMF network element), or an application function network element (AF network element). This is not limited.

It may be understood that the second network element and the first network element may be a same network element, or may be different network elements. This is not limited.

It may be understood that when the first network element and the second network element are a same network element, the fourth request information may be separately transmitted; or the second request message may further include the fourth request information (that is, the fourth request information is carried in the second request message). When the first network element and the second network element are not a same network element, the fourth request information may be separately transmitted (that is, the fourth request information is not carried in the second request message).

S1402: The second network element sends the first data corresponding to the location information of the N terminal devices to the network data analytics function network element, and correspondingly, the network data analytics function network element receives the first data corresponding to the location information of the N terminal devices from the second network element.

The second network element may send, when sending the location information of the N terminal devices, the first data corresponding to the location information of the N terminal devices, to ensure that the first data is associated with a label corresponding to the first data in terms of time. S1403: The network data analytics function network element trains the first positioning model based on the location information of the N terminal devices and the first data corresponding to the location information of the N terminal devices.

It may be understood that after determining the location information of the N terminal devices, the network data analytics function network element may determine the first data corresponding to the location information of the N terminal devices.

Based on the method shown in FIG. 14, the network data analytics function network element may receive, when receiving the location information of the terminal device, the first data corresponding to the location information of the terminal device, so that it can be ensured as much as possible that the first data and the label of the first data are consistent in terms of time. A feasible solution of associating the first data with the label of the first data is provided.

In another possible implementation, steps of training the first positioning model by the network data analytics function may be shown in FIG. 15.

S1501: The network data analytics function network element sends a second message to a third network element, and correspondingly, the third network element receives the second message from the network data analytics function network element.

It may be understood that the second message may include identification information of the N terminal devices, and the third network element may determine the corresponding first data based on the identification information of the N terminal devices.

Optionally, the third network element may be a location management function network element (LMF network element), an operations, administration and management function network element (OAM network element), a gateway mobile positioning center network element (GMLC network element), a session management function network element (SMF network element), an access and mobility management function network element (AMF network element), or an application function network element (AF network element). This is not limited.

It may be understood that the third network element and the first network element may be a same network element, or may be different network elements; or the third network element and the second network element may be a same network element, or may be different network elements. This is not limited.

For S1501, refer to S701. Details are not described herein again.

S1502: The third network element sends the first data corresponding to the N terminal devices to the network data analytics function network element, and correspondingly, the network data analytics function network element receives the first data corresponding to the N terminal devices from the third network element.

For S1502, refer to S702. Details are not described herein again.

S1503: The network data analytics function network element trains the first positioning model based on the location information corresponding to the time information and the first data.

The network data analytics function network element may determine time of the location information of each terminal device based on the time information corresponding to the location information of the terminal device, to determine the first data of same time.

For example, the time corresponding to the location information of the terminal device is a moment 1 to a moment 2. It is assumed that in the first data of the terminal device, time corresponding to first data 1 is the moment 1 to the moment 2, and time corresponding to first data 2 is the moment 2 to a moment 3. The network data analytics function network element may train the first positioning model based on the location information of the terminal device and the first data 1 that correspond to the moment 1 to the moment 2.

In a possible embodiment, for example, time corresponding to location information 1 of the terminal device is a moment 1 to a moment 2, and time corresponding to location information 2 of the terminal device is the moment 2 to a moment 3. It is assumed that in first data of the terminal device, time corresponding to first data 1 is the moment 1 to the moment 2, and time corresponding to first data 2 is the moment 2 to the moment 3. When determining the location information 1 of the terminal device, the network data analytics function network element may train the first positioning model based on the location information 1 of the terminal device and the first data 1 that correspond to the moment 1 to the moment 2. Alternatively, when determining the location information 2 of the terminal device, the network data analytics function network element may train the first positioning model based on the location information 2 of the terminal device and the first data 2 that correspond to the moment 2 to the moment 3.

Based on the method shown in FIG. 15, the network data analytics function network element may determine first data of same time based on the time information in the location information of the terminal device, so that it can be ensured that the first data and the label of the first data are consistent in terms of time. A feasible solution of associating the first data with the label of the first data is provided.

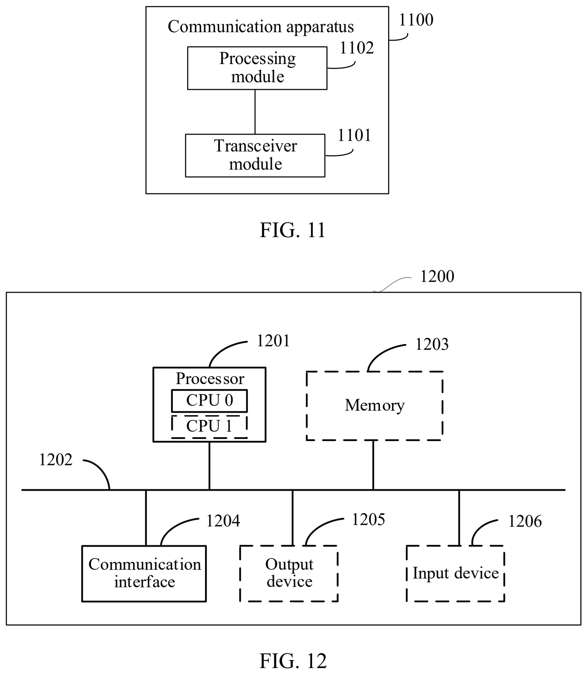

With reference to FIG. 11 and FIG. 12, the following describes in detail a communication apparatus configured to perform the model obtaining method or the training data obtaining method provided in embodiments of this application.

FIG. 11 is a diagram 1 of a structure of a communication apparatus according to an embodiment of this application. For example, as shown in FIG. 11, the communication apparatus 1100 includes a transceiver module 1101 and a processing module 1102. For ease of description, FIG. 11 shows only main components of the communication apparatus.

The communication apparatus 1100 may be used in the communication system shown in FIG. 3, and perform functions of the location management function network element, the network data analytics function network element, or another network element in the foregoing method embodiments. For example, the transceiver module 1101 is configured to perform receiving and sending functions of the communication apparatus 1100, and the processing module 1102 is configured to perform a function of the communication apparatus 1100 other than the receiving and sending functions.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or the instruction, the communication apparatus 1100 can perform a function of the foregoing method.

It may be understood that the communication apparatus 1100 may be a network device, may be a chip (system) or another part or component that may be disposed in the network device, or may be an apparatus including the network device. This is not limited in this application.

In addition, for technical effects of the communication apparatus 1100, refer to the technical effects of the communication methods shown in FIG. 4 to FIG. 10. Details are not described herein again. In this application, the communication apparatus 1100 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 1100 in FIG. 11 is a chip or a chip system, a function/implementation process of the transceiver module 1101 may be implemented by an input/output interface (or a communication interface) of the chip or the chip system, and a function/implementation process of the processing module 1102 may be implemented by a processor (or a processing circuit) of the chip or the chip system.

Because the communication apparatus 1100 provided in this embodiment may perform the foregoing methods, for a technical effect that can be obtained by the terminal device, refer to the foregoing method embodiments. Details are not described herein again.

In a possible product form, various network elements such as the location management function network element or the network data analytics function network element in embodiments of this application may be implemented by using one or more field programmable gate arrays (field programmable gate arrays, FPGAs), a programmable logic device (programmable logic device, PLD), a controller, a state machine, a gate logic, a discrete hardware component, any other suitable circuit, or any combination of circuits that can perform various functions described in this application.

In another possible product form, each network element in embodiments of this application, for example, a location management function network element or a network data analytics function network element, may use a composition structure shown in FIG. 12, or include components shown in FIG. 12.

FIG. 12 is a composition diagram of a communication apparatus 1200 according to this application. The communication apparatus 1200 may be any network element in the foregoing method embodiments, or a chip or a system on chip in the network element.

As shown in FIG. 12, the communication apparatus 1200 includes at least one processor 1201 and at least one communication interface (FIG. 12 is described merely by using an example in which one communication interface 1204 and one processor 1201 are included). Optionally, the communication apparatus 1200 may further include a communication bus 1202 and a memory 1203.

The processor 1201 may be a general-purpose central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 1201 may alternatively be another apparatus having a processing function, for example, a circuit, a component, or a software module. This is not limited.

The communication bus 1202 is configured to connect different components in the communication apparatus 1200, so that the different components can communicate with each other. The communication bus 1202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representation in FIG. 12, but this does not mean that there is only one bus or only one type of bus.

The communication interface 1204 is configured to communicate with another device or a communication network. For example, the communication interface 1204 may be a module, a circuit, a transceiver, or any apparatus that can implement communication. Optionally, the communication interface 1204 may alternatively be an input/output interface located in the processor 1201, and is configured to implement signal input and signal output of the processor. The memory 1203 may be an apparatus having a storage function, and is configured to store instructions and/or data. The instructions may be computer programs.

For example, the memory 1203 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1203 may exist independently of the processor 1201, or may be integrated with the processor 1201. The memory 1203 may be located in the communication apparatus 1200, or may be located outside the communication apparatus 1200. This is not limited. The processor 1201 may be configured to execute the instructions stored in the memory 1203, to implement a method provided in the foregoing embodiments of this application.

In an optional implementation, the communication apparatus 1200 may further include an output device 1205 and an input device 1206. The output device 1205 communicates with the processor 1201, and may display information in a plurality of manners. For example, the output device 1205 may be a liquid crystal display (liquid crystal display, LCD), a light emitting diode (light emitting diode, LED) display device, a cathode ray tube (cathode ray tube, CRT) display device, or a projector (projector). The input device 1206 communicates with the processor 1201, and can receive an input of a user in a plurality of manners. For example, the input device 1206 may be a mouse, a keyboard, a touchscreen device, or a sensing device.

In some embodiments, in hardware implementation, a person skilled in the art may figure out that the communication apparatus 1100 may be in a form of the communication apparatus 1200 shown in FIG. 12.

In an example, a function/implementation process of the processing module 1102 in FIG. 11 may be implemented by the processor 1201 in the communication apparatus 1200 shown in FIG. 12 by invoking the computer-executable instructions stored in the memory 1203. A function/implementation process of the transceiver module 1101 in FIG. 11 may be implemented through the communication interface 1204 in the communication apparatus 1200 shown in FIG. 12.

It should be noted that the structure shown in FIG. 12 does not constitute a specific limitation on a structure of the network element. For example, in some other embodiments of this application, the network element may include more or fewer components than those shown in the figure, some components may be combined, some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to indicate the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the apparatus embodiments described above are merely schematic. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A model obtaining method, wherein the method comprises:
sending, by a location management function network element, a first message to a network data analytics function network element, wherein the first message is for requesting a positioning model; and
receiving, by the location management function network element, a first positioning model from the network data analytics function network element, wherein the first positioning model is for positioning a terminal device location.

2. The method according to claim 1, wherein
the first message comprises model requirement information, the model requirement information indicates a requirement of the location management function network element for the positioning model, and the model requirement information comprises at least one of model structure requirement information and model generalization capability requirement information, wherein the model structure requirement information indicates a model structure requirement of the location management function network element for the positioning model, and the model generalization capability requirement information indicates a model generalization capability requirement of the location management function network element for the positioning model.

3. The method according to claim 2, wherein
the model structure requirement information is identification information of a structure type required by the location management function network element.

4. The method according to claim 2 or 3 , wherein
the model generalization capability requirement information comprises information indicating a model performance requirement of the location management function network element for the positioning model in different test data sets.

5. The method according to claim 4, wherein the different test data sets are test data sets at different terminal device transmit power;
the different test data sets are test data sets under different network synchronization errors; or
the different test data sets are test data sets under different terminal device timing errors.

6. The method according to any one of claims 1 to 5, wherein the first message comprises model type indication information, and the model type indication information indicates that a type of a model requested by the location management function network element is a positioning model.

7. The method according to any one of claims 1 to 6, wherein the method further comprises:
receiving, by the location management function network element, model information from the network data analytics function network element, wherein the model information comprises one or more pieces of model feature information of the first positioning model.

8. The method according to claim 1, 6, or 7, wherein the first message comprises second information, and the second information indicates the network data analytics function network element to autonomously determine a positioning model meeting a current environment requirement.

9. The method according to claim 8, wherein the method further comprises:
receiving, by the location management function network element, first environment identification information from the network data analytics function network element, wherein the first environment identification information corresponds to the first positioning model, and the first environment identification information is for identifying an environment corresponding to the first positioning model.

10. The method according to claim 9, wherein the method further comprises:
obtaining, by the location management function network element, second environment identification information, wherein the second environment identification information is for identifying a current environment; and
selecting, by the location management function network element, a target positioning model from a plurality of positioning models based on environment identification information respectively corresponding to the plurality of positioning models, wherein the plurality of positioning models comprise the first positioning model and one or more second positioning models, and environment identification information corresponding to the target positioning model is the same as the second environment identification information.

11. The method according to claim 10, wherein the second positioning model is locally deployed by the location management function network element; or the second positioning model is sent by the network data analytics function network element to the location management function network element.

12. The method according to any one of claims 1 to 11, wherein the method further comprises:
receiving, by the location management function network element, a second message from the network data analytics function network element, wherein the second message is for requesting training data, the second message comprises event identifier information, the event identifier information is for identifying the requested training data, and the training data comprises at least one of the following: a channel impulse response, a channel energy response, and a channel power delay profile;
obtaining, by the location management function network element, the training data based on the event identifier information; and
sending, by the location management function network element, the training data to the network data analytics function network element, wherein the training data is for training the first positioning model.

13. The method according to any one of claims 1 to 12, wherein the method further comprises:
receiving, by the location management function network element, a third message from the network data analytics function network element, wherein the third message is for requesting location information of a terminal device; and
the third message comprises first indication information, wherein the first indication information indicates a first capability of the terminal device, and the first capability is a capability of the terminal device to provide first location information of the terminal device;
obtaining, by the location management function network element, the first location information of the terminal device based on a preconfigured correspondence between a terminal device and a first capability; and
sending, by the location management function network element, the first location information of the terminal device to the network data analytics function network element, wherein the first location information of the terminal device is for training the first positioning model.

14. The method according to claim 13, wherein obtaining, by the location management function network element, the first location information of the terminal device comprises:
obtaining, by the location management function network element, preconfigured first location information of the terminal device; or
receiving, by the location management function network element, the first location information from the terminal device.

15. A data obtaining method, comprising:
receiving, by a location management function network element, a second request message from a network data analytics function network element, wherein the second request message is for requesting location information of a terminal device; and
sending, by the location management function network element, a second response message to the network data analytics function network element, wherein the second response message comprises location information of M terminal devices, and M is a positive integer.

16. The method according to claim 15, wherein
the second request message comprises identification information of a positioning reference unit PRU of the terminal device; or
the location management function network element receives identification information of a PRU of the terminal device from the network data analytics function network element, wherein
the location information of the M terminal devices is location information corresponding to PRUs of the M terminal devices.

17. The method according to claim 15 or 16, wherein
the location management function network element receives second indication information from the network data analytics function network element; or
the second request message further comprises second indication information, wherein
the second indication information indicates to obtain location information of a terminal device that is for model training, and the location information of the M terminal devices is location information of one or more terminal devices configured with a PRU and/or location information of one or more terminal devices not configured with a PRU.

18. The method according to any one of claims 15 to 17, wherein
the location management function network element receives third indication information from the network data analytics function network element; or
the second request message further comprises third indication information, wherein
the third indication information indicates to obtain location information of a PRU of the terminal device, and the location information of the M terminal devices is location information of M terminal devices in which a PRU exists.

19. The method according to any one of claims 15 to 18, wherein
the location management function network element receives quantity threshold information from the network data analytics function network element; or
the second request message further comprises quantity threshold information, wherein
the quantity threshold information indicates a quantity threshold of location information of the terminal device that is expected to be obtained.

20. The method according to any one of claims 15 to 19, wherein
the location management function network element receives fourth indication information from the network data analytics function network element; or
the second request message further comprises fourth indication information; and
the location management function network element determines the location information of the M terminal devices based on the fourth indication information, wherein
the fourth indication information indicates information about a quality requirement, and quality of the location information of the M terminal devices meets the quality requirement.

21. The method according to any one of claims 15 to 20, wherein
the location management function network element receives fifth indication information from the network data analytics function network element; or
the second request message further comprises fifth indication information; and
the location management function network element determines the location information of the M terminal devices based on the fifth indication information, wherein
the fifth indication information indicates a threshold of a ratio of a quantity of terminal devices in which a PRU exists in the obtained location information of the terminal device to a quantity of all obtained terminal devices, and a ratio of a quantity of terminal devices in which a PRU exists in the M terminal devices to M meets the ratio threshold.

22. The method according to any one of claims 15 to 21, wherein the method further comprises:
sending, by the location management function network element to the network data analytics function network element, quality information corresponding to the location information of the M terminal devices; or
the second response message further comprises quality information corresponding to the location information of the M terminal devices.

23. The method according to claim 22, wherein the method further comprises:
receiving, by the location management function network element, third request information from the network data analytics function network element; or
the second request message further comprises third request information, wherein
the third request information is for requesting quality information corresponding to the location information of the terminal device.

24. The method according to any one of claims 15 to 23, wherein the method further comprises:
sending, by the location management function network element, sixth indication information to the network data analytics function network element; or
the second response message further comprises sixth indication information, wherein
the sixth indication information indicates whether a PRU exists in each of the M terminal devices.

25. The method according to any one of claims 15 to 24, wherein the method further comprises:
sending, by the location management function network element, seventh indication information to the network data analytics function network element; or
the second response message further comprises seventh indication information, wherein
the seventh indication information indicates a location generation method corresponding to location information of each of the M terminal devices.

26. The method according to any one of claims 15 to 25, wherein the method further comprises:
receiving, by the location management function network element, fourth request information from the network data analytics function network element; or
the second request message further comprises fourth request information, wherein
the fourth request information is for requesting first data corresponding to the location information of the M terminal devices; and
sending, by the location management function network element to the network data analytics function network element, the first data corresponding to the location information of the M terminal devices.

27. The method according to any one of claims 15 to 26, wherein
the location information of each terminal device further comprises time information; or
the second response message further comprises time information corresponding to the location information of each terminal device, wherein
the time information indicates time for obtaining the location information.

28. A model obtaining method, wherein the method comprises:
receiving, by a network data analytics function network element, a first message from a location management function network element, wherein the first message is for requesting a positioning model;training, by the network data analytics function network element, a first positioning model based on the first message; and
sending, by the network data analytics function network element, the first positioning model to the location management function network element.

29. The method according to claim 28, wherein
the first message comprises model requirement information, the model requirement information indicates a requirement of the location management function network element for the positioning model, and the model requirement information comprises at least one of model structure requirement information and model generalization capability requirement information, wherein the model structure requirement information indicates a model structure requirement of the location management function network element for the positioning model, and the model generalization capability requirement information indicates a model generalization capability requirement of the location management function network element for the positioning model.

30. The method according to claim 29, wherein
the model structure requirement information is identification information of a structure type required by the location management function network element.

31. The method according to claim 29 or 30, wherein
the model generalization capability requirement information indicates a model performance requirement of the location management function network element for the positioning model in different test data sets.

32. The method according to claim 31, wherein the different test data sets are test data sets at different terminal device transmit power;
the different test data sets are test data sets under different network synchronization errors; or the different test data sets are test data sets under different terminal device timing errors.

33. The method according to any one of claims 28 to 32, wherein the first message comprises model type indication information, and the model type indication information indicates that a type of a model requested by the location management function network element is a positioning model.

34. The method according to any one of claims 28 to 33, wherein the method further comprises:
sending, by the network data analytics function network element, model information to the location management function network element, wherein the model information comprises one or more pieces of model feature information of the first positioning model.

35. The method according to claim 28, 33, or 34, wherein the first message comprises second information, and the second information indicates the network data analytics function network element to autonomously determine a positioning model meeting a current environment requirement.

36. The method according to any one of claims 28 or 33 to 35, wherein training, by the network data analytics function network element, the first positioning model based on the first message comprises:
determining, by the network data analytics function network element based on the first message, first environment identification information corresponding to a current environment; and
training, by the network data analytics function network element based on the first environment identification information, the first positioning model corresponding to the first environment identification information.

37. The method according to claim 36, wherein the method further comprises:
sending, by the network data analytics function network element, the first environment identification information to the location management function network element.

38. The method according to claim 37, wherein the method further comprises:
receiving, by the network data analytics function network element, first request information from the location management function network element, wherein the first request information is for requesting the network data analytics function network element to provide environment identification information;
determining, by the network data analytics function network element, second environment identification information based on the first request information; and
sending, by the network data analytics function network element, the second environment identification information to the location management function network element.

39. The method according to any one of claims 28 to 38, wherein the method further comprises:
sending, by the network data analytics function network element, a second message to a first network element, wherein the second message is for requesting training data, the second message comprises event identifier information, the event identifier information is for identifying the requested training data, and the training data comprises at least one of the following: a channel impulse response, a channel energy response, and a channel power delay profile; and
receiving, by the network data analytics function network element, training data from the first network element; and
training, by the network data analytics function network element, the first positioning model comprises:
training, by the network data analytics function network element, the first positioning model based on the training data.

40. The method according to claim 39, wherein the first network element is the location management function network element, an operations, administration and management function network element, a session management function network element, an access and mobility management function network element, or an application function network element.

41. The method according to any one of claims 28 to 40, wherein the method further comprises:
sending, by the network data analytics function network element, a third message to the location management function network element, wherein the third message is for requesting location information of a terminal device; and
receiving, by the network data analytics function network element, first location information of the terminal device from the location management function network element; and
training, by the network data analytics function network element, the first positioning model comprises:
training, by the network data analytics function network element, the first positioning model based on the first location information of the terminal device.

42. The method according to claim 41, wherein before sending, by the network data analytics function network element, the third message to the location management function network element, the method further comprises:
sending, by the network data analytics function network element, a fourth message to a data management network element, wherein the fourth message comprises first indication information, the first indication information indicates a first capability of the terminal device, the first capability is a capability of the terminal device to provide the first location information of the terminal device, and the fourth message is for requesting an identifier of the terminal device that has the first capability; and
receiving, by the network data analytics function network element from the data management network element, identification information of the terminal device corresponding to the first indication information, wherein
the identification information of the terminal device is carried in the third message, and the identification information of the terminal device is used by the location management function network element to determine the first location information of the terminal device.

43. The method according to any one of claims 28 to 42, wherein the method further comprises:
sending, by the network data analytics function network element, a third message to a data management network element, wherein the third message is for requesting location information of a terminal device; and
receiving, by the network data analytics function network element, first location information of the terminal device from the data management network element; and
training, by the network data analytics function network element, the first positioning model comprises:
training, by the network data analytics function network element, the first positioning model based on the first location information of the terminal device.

44. The method according to claim 43, wherein the method further comprises: receiving, by the network data analytics function network element from the data management network element, information about a validity time period corresponding to the first location information of the terminal device.

45. A data obtaining method, comprising:
sending, by a network data analytics function network element, a second request message to a first network element, wherein the second request message is for requesting location information of a terminal device;
receiving, by the network data analytics function network element, a second response message from the first network element, wherein the second response message comprises location information of M terminal devices, and M is a positive integer; and
determining, by the network data analytics function network element, location information of N terminal devices based on the second response message, and training, by the network data analytics function network element, a first positioning model based on the location information of the N terminal devices, wherein N is a positive integer.

46. The method according to claim 45, wherein
the second request message comprises identification information of a positioning reference unit PRU of the terminal device; or
the network data analytics function network element sends the identification information of the PRU of the terminal device to the first network element, wherein
the location information of the M terminal devices is location information corresponding to identification information of PRUs of the M terminal devices.

47. The method according to claim 46, wherein
the identification information of the PRU of the terminal device is prestored.

48. The method according to any one of claims 45 to 47, wherein
the network data analytics function network element sends second indication information to the first network element; or
the second request message further comprises second indication information, wherein
the second indication information indicates to obtain location information of a terminal device that is for model training, and the location information of the M terminal devices is location information of one or more terminal devices in which a PRU exists and/or location information of one or more terminal devices in which no PRU exists.

49. The method according to any one of claims 45 to 48, wherein
the network data analytics function network element sends third indication information to the first network element; or
the second request message further comprises third indication information, wherein
the third indication information indicates to obtain location information of a PRU of the terminal device, and the location information of the M terminal devices is location information of M terminal devices in which a PRU exists.

50. The method according to any one of claims 45 to 49, wherein
the network data analytics function network element sends quantity threshold information to the first network element; or
the second request message further comprises quantity threshold information, wherein
the quantity threshold information indicates a quantity threshold of location information of the terminal device that is expected to be obtained.

51. The method according to any one of claims 45 to 50, wherein that the second response message comprises the location information of the M terminal devices comprises:
the network data analytics function network element sends fourth indication information to the first network element; or
the second request message further comprises fourth indication information, wherein
the fourth indication information indicates information about a quality requirement, and quality of the location information of the M terminal devices meets the quality threshold.

52. The method according to any one of claims 45 to 51, wherein that the second response message comprises the location information of the M terminal devices comprises:
the network data analytics function network element sends fifth indication information to the first network element; or
the second request message further comprises fifth indication information, wherein
the fifth indication information indicates a threshold of a ratio of a quantity of terminal devices in which a PRU exists in the location information of the terminal device that is expected to be obtained to a quantity of all obtained terminal devices, and a ratio of a quantity of terminal devices in which a PRU exists in the M terminal devices to M meets the ratio threshold.

53. The method according to any one of claims 48 to 52, wherein determining, by the network data analytics function network element, the location information of the N terminal devices based on the second response message comprises:
receiving, by the network data analytics function network element, quality information corresponding to the location information of the M terminal devices from the first network element;
the second response message further comprising quality information corresponding to the location information of the M terminal devices; or
determining, by the network data analytics function network element based on positioning accuracy of the location information of the terminal device, quality corresponding to the location information of the M terminal devices; and
determining, by the network data analytics function network element, the location information of the N terminal devices based on the quality information corresponding to the location information of the M terminal devices.

54. The method according to claim 53, wherein the method further comprises:
sending, by the network data analytics function network element, third request information to the first network element; or
the second request message further comprises third request information, wherein
the third request information is for requesting quality information corresponding to the location information of the terminal device.

55. The method according to any one of claims 45 to 54, wherein determining, by the network data analytics function network element, the location information of the N terminal devices based on the second response message comprises:
receiving, by the network data analytics function network element, sixth indication information from the first network element; or
the second response message further comprising sixth indication information; and
determining, by the network data analytics function network element, the location information of the N terminal devices from the location information of the M terminal devices based on the sixth indication information, wherein
the sixth indication information indicates whether a PRU exists in each of the M terminal devices, and the location information of the N terminal devices comprises location information of a terminal device in which a PRU exists.

56. The method according to any one of claims 45 to 55, wherein determining, by the network data analytics function network element, the location information of the N terminal devices based on the second response message comprises:
receiving, by the network data analytics function network element, seventh indication information from the first network element; or
the second response message further comprising seventh indication information; and
determining, by the network data analytics function network element, the location information of the N terminal devices from the location information of the M terminal devices based on the seventh indication information, wherein
the seventh indication information indicates a location generation method corresponding to location information of each of the M terminal devices.

57. The method according to any one of claims 45 to 56, wherein training the first positioning model comprises:
sending, by the network data analytics function network element, fourth request information to a second network element, wherein the fourth request information is for requesting first data corresponding to the location information of the M terminal devices;
receiving, by the network data analytics function network element, the first data corresponding to the location information of the M terminal devices from the second network element; and
training, by the network data analytics function network element, the first positioning model based on the location information of the M terminal devices and the first data corresponding to the location information of the M terminal devices.

58. The method according to any one of claims 45 to 57, wherein
the location information of each terminal device further comprises time information; or
the second response message further comprises time information corresponding to the location information of each terminal device, wherein
the time information indicates time for obtaining the location information.

59. The method according to claim 58, wherein training the first positioning model comprises:
receiving, by the network data analytics function network element, the first data corresponding to the M terminal devices from a third network element; and
training, by the network data analytics function network element, the first positioning model based on the location information corresponding to the time information and the first data.

60. The method according to claim 59, wherein
the third network element is a location management function network element, an operations, administration and management function network element, a gateway mobile positioning center network element, a session management function network element, an access and mobility management function network element, or an application function network element.

61. The method according to any one of claims 56 to 60, wherein
the second network element is a location management function network element, an operations, administration and management function network element, a gateway mobile positioning center network element, a session management function network element, an access and mobility management function network element, or an application function network element.

62. The method according to any one of claims 45 to 61, wherein
the first network element is a location management function network element, an operations, administration and management function network element, a gateway mobile positioning center network element, a session management function network element, an access and mobility management function network element, or an application function network element.

63. A model obtaining method, wherein the method comprises:
sending, by a location management function network element, a first message to a network data analytics function network element, wherein the first message is for requesting a positioning model;
receiving, by the network data analytics function network element, the first message;
training, by the network data analytics function network element, a first positioning model based on the first message, wherein the first positioning model is for positioning a terminal device location;
sending, by the network data analytics function network element, the first positioning model to the location management function network element; and
receiving, by the location management function network element, the first positioning model.

64. A communication apparatus, wherein the apparatus comprises a module configured to perform the method according to any one of claims 1 to 14, or a module configured to perform the method according to any one of claims 15 to 27.

65. A communication apparatus, wherein the apparatus comprises a module configured to perform the method according to any one of claims 28 to 44, or a module configured to perform the method according to any one of claims 45 to 62.

66. A communication apparatus, wherein the communication apparatus comprises a processor and a memory, the memory is configured to store computer instructions; and when the processor executes the instructions, the communication apparatus is enabled to perform the method according to any one of claims 1 to 63.

67. A computer-readable storage medium, wherein the computer-readable storage medium comprises a computer program or instructions; and when the computer program or the instructions are run on a computer, the computer is enabled to perform the method according to any one of claims 1 to 63.

68. A communication system, wherein the communication system comprises a location management function network element and a network data analytics function network element, wherein the location management function network element is configured to perform the method according to any one of claims 1 to 14, or the location management function network element is configured to perform the method according to any one of claims 15 to 27, and the network data analytics function network element is configured to perform the method according to any one of claims 28 to 44, or the network data analytics function network element is configured to perform the method according to any one of claims 45 to 62.
